(19) Europäisches Patentamt
European Patent Office
Office européen des brevets

(11) EP 4 459 720 A1

(12) EUROPEAN PATENT APPLICATION
published in accordance with Art. 153(4) EPC

(43) Date of publication:
**06.11.2024 Bulletin 2024/45**

(21) Application number: **22915544.5**

(22) Date of filing: **07.11.2022**

(51) International Patent Classification (IPC):
***H01M 4/62*** *(2006.01)* ***H01M 4/139*** *(2010.01)*

(52) Cooperative Patent Classification (CPC):
**H01M 4/139; H01M 4/62;** Y02E 60/10

(86) International application number:
**PCT/JP2022/041350**

(87) International publication number:
**WO 2023/127311 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 JP 2021214258**

(71) Applicant: **Resonac Corporation**
**Tokyo 105-7325 (JP)**

(72) Inventors:
- **KAWAHARA, Yuta**
  **Tokyo 105-7325 (JP)**
- **IKEHATA, Ryohsuke**
  **Tokyo 105-7325 (JP)**
- **HORIKOSHI, Hideo**
  **Tokyo 105-7325 (JP)**

(74) Representative: **Strehl Schübel-Hopf & Partner**
**Maximilianstrasse 54**
**80538 München (DE)**

# (54) BINDER POLYMER FOR NONAQUEOUS SECONDARY BATTERIES, BINDER COMPOSITION FOR NONAQUEOUS SECONDARY BATTERIES, AND NONAQUEOUS SECONDARY BATTERY ELECTRODE

(57) What is provided is a binder polymer for nonaqueous secondary batteries, in which, when a water dispersion at a pH of 12.0 at 23°C, which contains the binder polymer for nonaqueous secondary batteries at a solid content concentration of 8.0 mass%, is prepared and a 1.0 mol/L hydrochloric acid aqueous solution is added to 125 g of the water dispersion at a rate of 0.5 mL/30 seconds, there are only two linear functions, a first straight line L1 and a second straight line L2, which are determined through a least-squares method from a relationship between an electrical conductivity of y S/m of the water dispersion and a cumulative addition amount of x mL of the hydrochloric acid aqueous solution from the start of addition of the hydrochloric acid aqueous solution and until the electrical conductivity reaches 2.0 S/m, the first straight line L1 is represented by y = aix + $b_1$ ($a_1$ and $b_1$ are greater than 0) and the second straight line L2 is represented by y = $a_2$x + $b_2$ ($a_2$ is greater than $a_1$).

FIG. 1

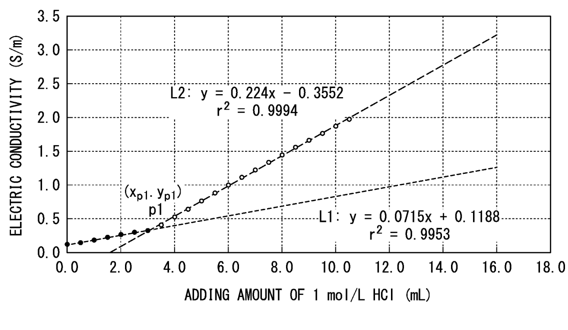


EP 4 459 720 A1

## Description

[Technical Field]

The present invention relates to a binder polymer for nonaqueous secondary batteries, a binder composition for nonaqueous secondary batteries, and a nonaqueous secondary battery electrode.

Priority is claimed on Japanese Patent Application No. 2021-214258, filed December 28, 2021, the content of which is incorporated herein by reference.

[Background Art]

Nonaqueous secondary batteries are widely used as power sources for notebook computers, mobile phones, power tools, electronic communication equipment, and the like because they can be made smaller and lighter. In recent years, nonaqueous secondary batteries have been used as power sources for electric vehicles and hybrid vehicles. Specific examples of the nonaqueous secondary batteries include lithium-ion secondary batteries.

A nonaqueous secondary battery includes a positive electrode using a metal oxide or the like as an active material, a negative electrode using a carbon material such as graphite as an active material, and an electrolyte. A positive electrode and a negative electrode usually contain a binder that binds active materials together and binds an active material to a current collector. In the related art, as binders used in nonaqueous secondary batteries, those described in Patent Documents 1 and 2 are known.

Patent Document 1 discloses a binder composition including water and a particulate polymer which consists of a polymer having a block region consisting of an aromatic vinyl monomer unit and has a surface acid content within a predetermined range. In addition, Patent Document 1 discloses that, by adding a hydrochloric acid aqueous solution to a sample in which the pH of a water dispersion of a particulate polymer is adjusted, and measuring the electrical conductivity of the sample, a hydrochloric acid content-electrical conductivity curve with three inflection points is observed.

Patent document 2 discloses a binder composition for secondary battery electrodes containing: 100 parts by mass of a polymer water dispersion which includes at least one selected from the group consisting of styrene butadiene copolymer latex and acrylic emulsions; and 1 to 20 parts by mass of a compound with a cloud point of 70°C or lower.

[Citation List]

[Patent Documents]

[Patent Document 1]
PCT International Publication No. WO2019/107229
[Patent Document 2]
Japanese Unexamined Patent Application, First Publication No. 2014-239070

[Summary of Invention]

[Technical Problem]

In recent years, there has been a strong demand for higher output, higher capacity, longer life and the like in nonaqueous secondary batteries. Therefore, there has been a demand for binders used in nonaqueous secondary batteries that can further reduce the internal resistance of nonaqueous secondary batteries using these binders and improve cycle characteristics.

The present invention has been made in consideration of the above-described circumstances, and an object of the present invention is to provide a binder polymer for nonaqueous secondary batteries that can be used as a material for a binder from which nonaqueous secondary batteries with a low internal resistance (DCR) and excellent cycle characteristics can be obtained, a binder composition for nonaqueous secondary batteries containing such a binder polymer, a binder for nonaqueous secondary batteries, and a slurry for nonaqueous secondary battery electrodes.

In addition, another object of the present invention is to provide a nonaqueous secondary battery electrode which contains a binder polymer for nonaqueous secondary batteries and from which nonaqueous secondary batteries with a low internal resistance and excellent cycle characteristics can be obtained, and a nonaqueous secondary battery including the nonaqueous secondary battery electrode.

[Solution to Problem]

The present invention has the following aspects.

A first aspect of the present invention provides a binder polymer for nonaqueous secondary batteries below.

[1] A binder polymer for nonaqueous secondary batteries, wherein,

when a water dispersion having a pH of 12.0 at 23°C, which contains the binder polymer for nonaqueous secondary batteries at a solid content concentration of 8.0 mass%, is prepared and a 1.0 mol/L hydrochloric acid aqueous solution is added to 125 g of the water dispersion at a rate of 0.5 mL/30 seconds, there are only two linear functions, a first straight line L1 and a second straight line L2, which are determined through a least-squares method from a relationship between an electrical conductivity of y S/m of the water dispersion and a cumulative addition amount of x mL of the hydrochloric acid aqueous solution from the start of addition of the hydrochloric acid aqueous solution and until the electrical conductivity of the water dispersion reaches 2.0 S/m, the first straight line L1 is represented by Formula (1) below, and the second straight line L2 is represented by Formula (2) below.

$$y = a_1x + b_1 \ldots (1)$$

(In Equation (1), $a_1$ and $b_1$ are greater than 0.)

$$y = a_2x + b_2 \ldots (2)$$

(In Equation (2), $a_2$ is greater than $a_1$.)

The binder polymer for nonaqueous secondary batteries of a first aspect of the present invention preferably has the following features [2] to [9]. Two or more of the following features are also preferably combined with each other.

[2] The binder polymer for nonaqueous secondary batteries according to [1], in which $a_1$ in Equation (1) above is 0.05 to 0.1.

[3] The binder polymer for nonaqueous secondary batteries according to [1] or [2], in which $a_2$ in Equation (2) above is 0.15 to 0.3.

[4] The binder polymer for nonaqueous secondary batteries according to any one of [1] to [3], in which $b_1$ in Equation (1) above is 0.05 to 0.3.

[5] The binder polymer for nonaqueous secondary batteries according to any one of [1] to [4], in which the binder polymer for nonaqueous secondary batteries includes a first structural unit derived from a monomer (a1), a second structural unit derived from a monomer (a2), and a third structural unit derived from an internal cross-linking agent (a3), in which the monomer (a1) is a nonionic compound having only one ethylenically unsaturated bond, the monomer (a2) is a compound having only one ethylenically unsaturated bond and an anionic functional group, and the internal cross-linking agent (a3) is a compound having a plurality of independent ethylenically unsaturated bonds.

[6] The binder polymer for nonaqueous secondary batteries according to [5], in which the anionic functional group is at least any of a carboxy group and a sulfo group.

[7] The binder polymer for nonaqueous secondary batteries according to [5] or [6], in which the monomer (a2) contains at least one of methacrylic acid, fumaric acid, and crotonic acid.

[8] The binder polymer for nonaqueous secondary batteries according to any one of [5] to [7], in which the binder polymer contains a total content of 80 mass% or more of the first structural unit and the second structural unit.

[9] The binder polymer for nonaqueous secondary batteries according to any one of [5] to [8], in which the content of the second structural unit based on 100 parts by mass of the first structural unit is 1.0 parts by mass to 30 parts by mass.

A second aspect of the present invention provides a binder composition for nonaqueous secondary batteries below.

[10] A binder composition for nonaqueous secondary batteries, including: the binder polymer for nonaqueous secondary batteries according to any one of [1] to [9]; and an aqueous medium.

A third aspect of the present invention provides a binder for nonaqueous secondary batteries below.

[11] A binder for nonaqueous secondary batteries, including: the binder polymer for nonaqueous secondary batteries according to any one of [1] to [9].

A fourth aspect of the present invention provides a slurry for nonaqueous secondary battery electrodes below.

[12] A slurry for nonaqueous secondary battery electrodes, including: the binder polymer for nonaqueous secondary batteries according to any one of [1] to [9]; an electrode active material; and an aqueous medium, in which the aqueous medium is one selected from the group consisting of water, a hydrophilic solvent, and a mixture containing water and a hydrophilic solvent.
A fifth aspect of the present invention provides a nonaqueous secondary battery electrode below.
[13] A nonaqueous secondary battery electrode including: the binder polymer for nonaqueous secondary batteries according to any one of [1] to [9].
A sixth aspect of the present invention provides a nonaqueous secondary battery below.
[14] A nonaqueous secondary battery including: the nonaqueous secondary battery electrode according to [13],

[Advantageous Effects of Invention]

According to the present invention, it is possible to provide a binder polymer for nonaqueous secondary batteries that can be used as a material for a binder from which nonaqueous secondary batteries with a low internal resistance and excellent cycle characteristics can be obtained.
Furthermore, according to the present invention, it is possible to provide a binder composition for nonaqueous secondary batteries, a binder for nonaqueous secondary batteries, and to provide a slurry for nonaqueous secondary battery electrodes from which nonaqueous secondary batteries with a low internal resistance and excellent cycle characteristics can be obtained.
In addition, according to the present invention, it is possible to provide a nonaqueous secondary battery electrode from which nonaqueous secondary batteries with a low internal resistance and excellent cycle characteristics can be obtained, and to provide nonaqueous secondary batteries including the nonaqueous secondary battery electrode and having a low internal resistance and excellent cycle characteristics.

[Brief Description of Drawings]

FIG. 1 is a graph showing an example of a relationship between a cumulative addition amount x (mL) of a hydrochloric acid aqueous solution and an electrical conductivity y (S/m), when the hydrochloric acid aqueous solution is added to a sample for electrical conductivity titration of Example 1.
FIG. 2 is a graph showing an example of a relationship between a cumulative addition amount x (mL) of a hydrochloric acid aqueous solution and an electrical conductivity y (S/m), when the hydrochloric acid aqueous solution is added to a sample for electrical conductivity titration of Comparative Example 1.

[Description of Embodiment]

Hereinafter, preferred examples of a binder polymer for nonaqueous secondary batteries (also referred to as a polymer used for a binder for nonaqueous secondary batteries), a binder composition for nonaqueous secondary batteries, a binder for nonaqueous secondary batteries, a slurry for nonaqueous secondary battery electrodes, a nonaqueous secondary battery electrode, and a nonaqueous secondary battery of the present invention will be described in detail. The present invention is not limited to only the embodiment shown below. For example, numbers, types, positions, amounts, ratios, materials, configurations, and the like can be added, omitted, replaced, or modified within a scope not departing from the gist of the present invention.
Here, the following words and phrases used in the present specification will be described.
The term "(meth)acrylic" is a generic term for acrylic and methacrylic. The term "(meth)acrylate" is a generic term for acrylate and methacrylate.
The term "ethylenically unsaturated bond" refers to an ethylenically unsaturated bond having radical polymerizability, unless otherwise specified.
In a polymer which is obtained by using a compound having an ethylenically unsaturated bond, a structural unit derived from the compound having an ethylenically unsaturated bond may mean a structural unit in which the chemical structure of a portion other than the portion corresponding to the ethylenically unsaturated bond of the structural unit in the polymer is the same as the chemical structure of a portion other than the ethylenically unsaturated bond in the compound. The ethylenically unsaturated bond of the compound may change to a single bond when forming the polymer. For example, in a polymer of methyl methacrylate, a structural unit derived from methyl methacrylate is represented by $-CH_2-C(CH_3)(COOCH_3)-$.
In the case of a polymer of a compound having an ionic functional group and an ethylenically unsaturated bond, for example, regarding the structural unit, such as the second structural unit to be described below, having an ionic

functional group such as a carboxy group, whether or not some of the functional groups have undergone ionexchange, structural units may be regarded as being derived from the same ionic compound. For example, a structural unit represented by $-CH_2-C(CH_3)(COONa)-$ may also be considered as a structural unit derived from methacrylic acid.

For compounds having a plurality of independent ethylenically unsaturated bonds, one or more ethylenically unsaturated bonds may remain inside the structural unit as a structural unit of the polymer of the compound. A plurality of independent ethylenically unsaturated bonds may mean a plurality of ethylenically unsaturated bonds that do not form a conjugated diene together. For example, in a case of a polymer of divinylbenzene, the structural unit derived from divinylbenzene may have a structure without an ethylenically unsaturated bond (a form in which portions corresponding to two ethylenically unsaturated bonds of divinylbenzene are both incorporated into a polymer chain) or a structure with one ethylenically unsaturated bond (a form in which only a portion corresponding to one ethylenically unsaturated bond is incorporated into a polymer chain).

Furthermore, if, after polymerization, the portion other than the chain structure corresponding to the ethylenically unsaturated bond in the polymer, such as a functional group such as a carboxy group, no longer corresponds to the chemical structure of a monomer due to a chemical reaction, the structural unit of the polymer is interpreted to be derived from a compound with the ethylenically unsaturated bond in the polymer. For example, in a case where vinyl acetate is polymerized and then saponified, the structural unit of the polymer is considered based on the chemical structure of the polymer, and the structural unit of the polymer is regarded as a structural unit derived from vinyl alcohol rather than a structural unit derived from vinyl acetate.

<1. Binder polymer for nonaqueous secondary batteries (P)>

A binder polymer for nonaqueous secondary batteries (P) (hereinafter, sometimes referred to as "binder polymer") of the present embodiment has characteristics related to the following linear function. First, a water dispersion at a pH of 12.0 containing the binder polymer (P) at a solid content concentration of 8.0 mass% is prepared. For this, a 1.0 mol/L hydrochloric acid aqueous solution was added to 125 g of the water dispersion at a rate of 0.5 mL/30 seconds. At this time, there are only two linear functions, a first straight line L1 and a second straight line L2, which are determined through a least-squares method from a relationship between an electrical conductivity (y) S/m of the water dispersion and a cumulative addition amount x (mL) of the hydrochloric acid aqueous solution from the start of addition of the hydrochloric acid aqueous solution and until the electrical conductivity reaches 2.0 S/m. In the present embodiment, a 1.0 mol/L hydrochloric acid aqueous solution is also referred to as a hydrochloric acid aqueous solution.

The water dispersion at a pH of 12.0 containing the binder polymer (P) at a solid content concentration of 8.0 mass% can be prepared, for example, by preparing a binder composition for nonaqueous secondary batteries containing the binder polymer (P) and water and then subjecting this to appropriate treatment, as will be described below. Alternatively, the water dispersion can be prepared by first preparing the binder polymer (P) alone, adding water or the like thereto to prepare a binder composition for nonaqueous secondary batteries, and then subjecting the prepared binder composition for nonaqueous secondary batteries to appropriate treatment.

FIG. 1 is a graph showing an example of the relationship between a cumulative addition amount x (mL) of a hydrochloric acid aqueous solution and an electrical conductivity y (S/m) when the hydrochloric acid aqueous solution is added to a water dispersion (a sample for electrical conductivity titration of Example 1 to be described below) containing a binder polymer (P) under the above-described conditions. In FIG. 1, the horizontal axis (X-coordinate axis) shows the cumulative addition amount of 1.0 mol/L hydrochloric acid aqueous solution (mL), and the vertical axis (Y-coordinate axis) shows the electrical conductivity (S/m) of the water dispersion. The plots on the XY coordinates shown in FIG. 1 are measurement values of the electrical conductivity y (S/m).

Hereinafter, FIG. 1 is used to explain a method for determining a first straight line L1 and a second straight line L2 in the binder polymer (P) of the present embodiment.

[Method for determining first straight line L1 and second straight line L2]

In the present embodiment, five or more measurement values of the electrical conductivity y (S/m) of the water dispersion are used to determine a linear function through a least-squares method, as well as the square ($r^2$) of a correlation coefficient (r). $r^2$ is a parameter that indicates variations between the regression line (linear function) determined through the least-squares method and the measurement values of the electrical conductivity y (S/m) which are actual measurement values. $r^2$ is a number within a range of 0 to 1, with closer to 1 indicating less variation.

In the present embodiment, the numerical value of $r^2$ is used to determine an inflection point p1 ($x_{p1}$, $y_{p1}$) on the graph shown in FIG. 1 through a method shown below. Then, a linear function, which is determined by the method shown below through the least-squares method using measurement values (in the example shown in FIG. 1, seven measurement values) which are less than the measurement value ($yp_1$) of the electrical conductivity y (S/m) of the inflection point p1, is regarded as a straight line L1. In addition, a linear function, which is determined by the method

shown below through the least-squares method using measurement values which are greater than or equal to the measurement value ($y_{p1}$) of the electrical conductivity y (S/m) of the inflection point p1, is regarded as a straight line L2.

To determine the first straight line L1 and the second straight line L2, at first, the electrical conductivity y (S/m) of the water dispersion is measured, when the cumulative addition amount x (mL) of the 1.0 mol/L hydrochloric acid aqueous solution is zero. Thereafter, every time 0.5 mL of the hydrochloric acid aqueous solution is added, the electrical conductivity y (S/m) of the water dispersion is measured at the time point of addition. The addition of the hydrochloric acid aqueous solution and the measurement of the electrical conductivity of the water dispersion at the point of addition are performed until the electrical conductivity of the water dispersion reaches 2.0 S/m.

If the measurement value of the electrical conductivity y (S/m) of the water dispersion, which reaches 2.0 S/m, cannot be obtained due to the condition of experimental equipment or the like, the measurement results up to the cumulative addition amount x (mL) of hydrochloric acid aqueous solution when the measurement value of electrical conductivity y (S/m) is less than 2.0 S/m and closest to 2.0 S/m are used to calculate the first straight line L1 and the second straight line L2.

Next, a linear function determined through the least-squares method and the square ($r^2$) of a correlation coefficient (r) are obtained using a total of five points, which include the measurement value of the electrical conductivity y (S/m) when the cumulative addition amount x (mL) is zero and measurement values of four electrical conductivities y (S/m) where the cumulative addition amount x (mL) is greater than and close to zero . Then, it is confirmed whether or not $R^2$ is 0.992 or more. If $R^2$ is less than 0.992, it is regarded that there is no linear function (straight line L1) determined through the least-squares method. In the present embodiment, if $r^2$ is 0.992 or more, the variation in the measurement values used to calculate the linear function is sufficiently small, and errors in the linear function calculated by the least-squares method are considered sufficiently small.

If $r^2$ which is obtained using a total of five points, which include the measurement value of the electrical conductivity y (S/m) when the cumulative addition amount x (mL) is zero and the measurement values of four electrical conductivities y (S/m) where the cumulative addition amount x (mL) is greater than and close to zero, is 0.992 or more, the number of measurement values of the electrical conductivities y (S/m) where the cumulative addition amount x (mL) is greater than and close to zero is increased one by one from four, and each time a linear function is determined through the least-squares method. For each linear function determined, the square of a correlation coefficient (r) ($r^2$) is determined, and it is confirmed whether or not $r^2$ is 0.992 or more. In the present embodiment, if this operation is performed and $r^2$ changes to less than 0.992, it is regarded that a change has occurred in the component, which contributes to a neutralization reaction between the water dispersion and the hydrochloric acid aqueous solution, within the measurement range of the measurement values of the electrical conductivities y (S/m) which are used to determine the linear function through the least-squares method.

Then, among the linear functions in which $r^2$ is less than 0.992, a linear function with the lowest number of measurement values used to calculate the linear function is determined. In other words, the determined linear functions is a linear function with $r^2$ which falls below 0.992 for the first time using five or more measurement points that are greater than and close to zero. The maximum value of the cumulative addition amounts x which are used to calculate the aforementioned linear function is regarded as "$x_{p1}$," and the measurement value of the electrical conductivity y (S/m) obtained at that time is regarded as "$y_{p1}$." These are regarded as an inflection point p1 ($x_{p1}$, $y_{p1}$) on the graph shown in FIG. 1.

Then, a first straight line L1 is obtained as the linear function which is determined through the least-squares method using all the measurement values of the electrical conductivities y (S/m) obtained when the cumulative addition amount x is less than the value "$x_{p1}$" of the inflection point p1. Therefore, $r^2$ of the first straight line L1 is 0.992 or more. In FIG. 1, as an example, the first straight line L1, its equation and value of $r^2$ which are obtained from the sample for electrical conductivity titration of Example 1 to be described below are shown.

If there is no linear function in which $r^2$ is less than 0.992 in the linear functions determined through the above-described method, within the range from the start of addition of the hydrochloric acid aqueous solution to the water dispersion and until the measurement value of the electrical conductivity y (S/m) reaches 2.0 S/m, there is no inflection point. In this case, a linear function determined through a least-squares method is only the first straight line L1, and there is no second straight line L2.

Next, the measurement values of five (that is, four except for $x_{p1}$) electrical conductivities y (S/m) where the cumulative addition amount x is greater than or equal to and close to the value "$x_{p1}$" of the inflection point p1 are used to determine a linear function through the least-squares method, as well as the square of a correlation coefficient (r) ($r^2$).

Then, it is confirmed whether or not $r^2$ is 0.992 or more. As a result, if $r^2$ is less than 0.992, it is regarded that the linear function determined through the least-squares method is only the first straight line L1, and there is no second straight line L2.

In addition, even if $r^2$ is 0.992 or more, if the slope of the determined linear function is less than or equal to the slope ($a_1$) of the first straight line L1, it is regarded that there is no second straight line L2.

On the other hand, if $r^2$ which is determined using the measurement values of the five (that is, four except for

$x_{p1}$) electrical conductivities y (S/m) where the cumulative addition amount x is greater than or equal to and close to "$x_{p1}$" of the inflection point p1 is 0.992 or more, the number of measurement values of the electrical conductivities y (S/m) where the cumulative addition amount x is greater than and close to the value "$x_{p1}$" of the inflection point p1 is increased one by one from four. Then, every time the number of the above-described measurement values is increased, a linear function is determined through the least-squares method. Next, for each linear function determined, the square of a correlation coefficient (r) ($r^2$) is determined, and it is confirmed whether or not $r^2$ is 0.992 or more.

If the number of measurement values of the electrical conductivities y (S/m) used in determining a linear function is increased until all the measurement values of the electrical conductivities y (S/m) are 2.0 S/m or less and the cumulative addition amount x is greater than or equal to the value "$x_{p1}$" of the inflection point p1, and $r^2$ of each linear function determined through the least-squares method every time the number of the measurement is increased is all 0.992 or more, a linear function is determined through the least-squares method using all the measurement values of the electrical conductivities y (S/m) which are obtained when the cumulative addition amount x is greater than or equal to the value "$x_{p1}$" of the inflection point p1. Then, it is confirmed whether or not the slope of the determined linear function is greater than the slope ($a_1$) of the first straight line L1, and if the slope of the determined linear function is greater than the slope ($a_1$) of the first straight line L1, it is regarded as a second straight line L2. In FIG. 1, as an example, the second straight line L2 and its equation and value of $r^2$ determined from the sample for electrical conductivity titration of Example 1 to be described below are shown.

That is, if there is no linear function in which $r^2$ is less than 0.992 in the linear functions determined through the above-described method using the measured values within the range in which the cumulative addition amount x is greater than or equal to the value "$x_{p1}$" of the inflection point p1 and the measurement values of the electrical conductivities y (S/m) are 2.0 S/m or less, there is no inflection point within the range in which the cumulative addition amount x is greater than or equal to the value "$x_{p1}$" of the inflection point p1 and the measurement values of the electrical conductivities y (S/m) are 2.0 S/m or less. In addition, $r^2$ of the second straight line L2 is 0.992 or more.

Therefore, there is only one inflection point (in the example shown in FIG. 1, only the point p1 ($x_{p1}$, $y_{p1}$) on the graph) that exists within the range from the start of addition of the hydrochloric acid aqueous solution to the water dispersion and until the measurement values of the electrical conductivities y (S/m) reach 2.0 S/m. In this case, linear functions determined through the least-squares method are only the first straight line L1 and the second straight line L2, and there are no other regression lines.

Here, FIG. 2 is used to explain a case where there is a linear function in which $r^2$ is less than 0.992 among the plurality of linear functions, which are determined through the least-squares method using measurement values of six (that is, five except for the value of $x_{p1}$) or more electrical conductivities y (S/m), which are close to the value "$x_{p1}$" of the inflection point p1 and are included within the range in which the cumulative addition amount x is greater than or equal to the value "$x_{p1}$" of the inflection point p1 and the measurement values of the electrical conductivities y (S/m) through the above-described method are 2.0 S/m or less. In this case, $r^2$ in the plurality of linear functions, which are determined through the least-squares method using the measurement values of the five (that is, four except for $x_{p1}$) electrical conductivities y (S/m) which are close to the value "$x_{p1}$" of the inflection point p1 and are included within the range in which the cumulative addition amount x is greater than or equal to "$x_{p1}$" and the measurement values of the electrical conductivities y (S/m) are 2.0 S/m or less, is 0.992 or more.

FIG. 2 is a graph showing an example of the relationship between a cumulative addition amount x (mL) of a hydrochloric acid aqueous solution and an electrical conductivity y (S/m), which are measured when the hydrochloric acid aqueous solution is added to a water dispersion (a sample for electrical conductivity titration of Comparative Example 1 to be described below) containing a binder polymer under the above-described conditions. In FIG. 2, the horizontal axis (X-coordinate axis) shows the cumulative addition amount of 1.0 mol/L hydrochloric acid aqueous solution (mL), and the vertical axis (Y-coordinate axis) shows the electrical conductivity (S/m) of the water dispersion. The plots provided on the XY coordinates shown in FIG. 2 are measurement values of the electrical conductivity y (S/m).

In FIG. 2, as an example, a first straight line L1 and its equation and value of $r^2$, and a second straight line L'2 and its equation and value of $r^2$, which are obtained from the sample for electrical conductivity titration of Comparative Example 1 to be described below, are shown.

In a case where there are linear functions in which $r^2$ is less than 0.992 among the plurality of linear functions determined through the least-squares method using measurement values of six or more (that is, five except for the value of $x_{p1}$) electrical conductivities y (S/m) which are close to the value "$x_{p1}$" of the inflection point p1 and within the range in which the cumulative addition amount x is greater than or equal to the inflection point p1 and the measurement values of the electrical conductivities y (S/m) are 2.0 S/m or less, a linear function with the lowest number of measurement values used for linear function calculation is determined among the linear functions in which $r^2$ is less than 0.992. In other words, the determined linear function is a linear function with $r^2$ falling below 0.992 for the first time, when a total of six or more measurement points close to the value "xp1 " of the inflection point p1 are used. The maximum value of the cumulative addition amount x used to calculate the linear function is regarded as "$x_{p2}$," and the measurement value of the electrical conductivity y (S/m) at that time is regarded as "$y_{p2}$." These are regarded as an inflection point p2 ($x_{P2}$,

$y_{p2}$) on the graph shown in FIG. 2.

In this case, as shown in FIG. 2, there are two or more inflection points (two, p1 and p2, in the example shown in FIG. 2) that exist within the range from the start of addition of the hydrochloric acid aqueous solution to the water dispersion and until the measurement values of the electrical conductivities y (S/m) reach 2.0 S/m.

Then, the linear function determined through the least-squares method using all the measurement values of the electrical conductivities y (S/m), which are obtained when the cumulative addition amount x is greater than or equal to the value of the inflection point p1 and less than the value of the inflection point p2, is regarded as a second straight line L'2. Thereafter, it is confirmed whether or not the slope ($a_2$) of the second straight line L'2 is greater than the slope ($a_1$) of the first straight line L1. If the slope ($a_2$) of the second straight line L'2 is greater than the slope ($a_1$) of the first straight line L1, it is regarded as the second straight line L2. At this time, $r^2$ of the second straight line L2 is 0.992 or more.

In the example shown in FIG. 2, the slope ($a_2$) of the second straight line L'2 is less than or equal to the slope ($a_1$) of the first straight line L1, and therefore, the second straight line L'2 is not the second straight line L2 in the present embodiment. At this time, $r^2$ of the second straight line L'2 is 0.992 or more.

Thereafter, in the same manner as when the second straight line L2 is determined after the first straight line L1 is determined, measurement values of five (that is, four except for the value of $x_{p2}$) electrical conductivities y (S/m), which are close to the value of the inflection point p2 and are included within the range in which the cumulative addition amount x is greater than or equal to the inflection point p2 and the measurement values of the electrical conductivities y (S/m) are 2.0 S/m or less, are used to determine a linear function through the least-squares method, as well as the square of a correlation coefficient (r) ($r^2$).

Then, it is confirmed whether or not $r^2$ is 0.992 or more. Then, when $r^2$ is less than 0.992, it is regarded that there is not only the first straight line L1 and the second straight line L2 (the second straight line L'2 in the example shown in FIG. 2), but also another straight line L'3 that is not a linear function determined through the least-squares method in the present embodiment.

When $r^2$ determined using the measurement values of the five electrical conductivities y (S/m) which are close to the value of the inflection point p2 and within the range in which the cumulative addition amount x is greater than or equal to the inflection point p2 and the measurement values of the electrical conductivities y (S/m) are 2.0 S/m or less is 0.992 or more, linear functions determined through the least-squares method are not only the first straight line L1 and the second straight line L2 (second straight line L'2 in the example shown in FIG. 2), but also include one or more lines (a third straight line L3 in the example shown in Fig. 2). In other words, there are three or more linear functions that can be determined through the least-squares method. At this time, $r^2$ of the third straight line L3 is 0.992 or more. In FIG. 2, as an example, the third straight line L3 and its equation and value of $r^2$ determined from the sample for electrical conductivity titration in Comparative Example 1 to be described below are shown.

The binder polymer (P) of the present embodiment has only two linear functions, the first straight line L1 and the second straight line L2, which are determined through the least-squares method from the relationship between the electrical conductivities (y) S/m and the cumulative addition amount x (mL) of the hydrochloric acid aqueous solution under the above-described conditions. The first straight line L1 is represented by Equation (1) below, and the second straight line L2 is represented by Equation (2) below.

$$y = a_1 x + b_1 \ ... \ (1)$$

(In Equation (1), $a_1$ and $b_1$ are greater than 0.)

$$y = a_2 x + b_2 \ ... \ (2)$$

(In Equation (2), $a_2$ is greater than $a_1$.)

$a_1$ in Equation (1) is a numerical value derived from a neutralization reaction in which alkalis used to adjust the pH of the water dispersion containing the binder polymer (P) is neutralized and a neutralization reaction caused by the components included in the polymer for binder (P). at in Equation (1) is greater than 0, preferably 0.05 to 0.1, more preferably 0.055 to 0.9, and still more preferably 0.06 to 0.8, as it can confirm that the components causing a neutralization reaction are sufficiently introduced in the binder polymer (P).

$a_2$ in Equation (2) is a numerical value derived from the reaction in which alkalis used to adjust the pH of the water dispersion containing the binder polymer (P) is neutralized. The change in electrical conductivity y (S/m) of the water dispersion containing the binder polymer (P) is more significant when the neutralization reaction caused by the components contained in the binder polymer (P) does not occur, compared to when not only the reaction in which

alkalis used for pH adjustment in the water dispersion are neutralized but also the neutralization reaction caused by the components contained in the binder polymer (P) occurs. Therefore, $a_2$ in Equation (2) is a positive value exceeding $a_1$ in Equation (1).

$a_2$ in Equation (2) is greater than $a_1$, preferably 0.15 to 0.3, more preferably 0.016 to 0.28, and still more preferably 0.017 to 0.25, as it can sufficiently confirm an end point of the neutralization reaction caused by the components contained in the binder polymer (P).

$b_1$ in Equation (1) is greater than 0 and preferably 0.05 to 0.3, more preferably 0.08 to 0.2, and still more preferably 0.1 to 0.18, as it can confirm that the components causing a neutralization reaction are sufficiently introduced into the binder polymer (P).

The binder polymer (P) in which $b_1$ in Equation (1) is 0.05 or more can be used as a material for binders from which nonaqueous secondary batteries having a lower internal resistance (DCR) and superior cycle characteristics can be obtained, because the components caused by the neutralization reaction are sufficiently introduced.

Examples of $b_2$ in Equation (2) include values smaller than $b_1$.

The binder polymer (P) of the present embodiment can be used as a material for binders, from which nonaqueous secondary batteries with a lower internal resistance (DCR) and superior cycle characteristics can be obtained. The reason why the binder polymer (P) exhibits the above-described effect is unclear, but is inferred as follows.

Hereinafter, a binder polymer ($P_a$) to be described below which is one embodiment will be described as an example, but the present invention is not limited to this example.

The binder polymer (P) of the present embodiment has only two linear functions, the first straight line L1 represented by Equation (1) and the second straight line L2 represented by Equation (2), determined under the above-described conditions (refer to FIG. 1). When the water dispersion of the binder polymer (P) of the present embodiment is prepared at a pH of 12.0 and then a neutralization reaction is performed by adding hydrochloric acid aqueous solution to the water dispersion, if the components neutralized by the hydrochloric acid aqueous solution changes during the neutralization reaction, the relationship between the electrical conductivities y (S/m) and the cumulative addition amount x (mL) of the hydrochloric acid aqueous solution also changes, and an inflection point appears. Since the binder polymer (P) of the present embodiment has only two linear functions, the first straight line L1 and the second straight line L2, determined under the above-described conditions, the inflection point appearing during the neutralization reaction under the above-described conditions is only one point p1 ($x_{p1}$, $y_{p1}$). In other words, in the water dispersion of the binder polymer (P) of the present embodiment, the components neutralized by the hydrochloric acid aqueous solution change only once.

In the neutralization reaction from the start of addition of the hydrochloric acid aqueous solution into the water dispersion to the inflection point p1, a first neutralization reaction occurs in which alkalis which are used for pH adjustment to prepare the water dispersion of the binder polymer (P) at a pH of 12.0 before the addition of the hydrochloric acid aqueous solution are neutralized. At this time, it is inferred that not only the first neutralization reaction but also a second neutralization reaction caused by an anionic functional group of the binder polymer (P) occurs. The second neutralization reaction is a reaction in which the anionic functional group included in the binder polymer (P), which was neutralized by pH adjustment prior to the addition of the hydrochloric acid aqueous solution, is re-neutralized by the hydrochloric acid aqueous solution.

In contrast, in the neutralization reaction from the appearance of the inflection point p1 until the measurement values of the electrical conductivities y (S/m) reach 2.0 S/m, it is inferred that only the first neutralization reaction occurs, because the anionic functional group of the binder polymer (P) which can be re-neutralized in the second neutralization reaction no longer exists.

From these facts, it is inferred that when the binder polymer (P) of the present embodiment is dispersed in an aqueous medium, an anionic functional group such as - COOH originating from the binder polymer (P), which is likely present on the outermost surface of particles consisting of the binder polymer (P), is not released into the water dispersion, but is unevenly distributed in the particles consisting of the binder polymer (P). Therefore, it is thought that, in a nonaqueous secondary battery (for example, a lithium-ion secondary battery) having a nonaqueous secondary battery electrode (for example, a negative electrode) containing the binder polymer (P) of the present embodiment, Li ions are likely to move within the negative electrode and unlikely to be collected locally. As a result, it is inferred that this lithium-ion secondary battery has low internal resistance (DCR) and high-capacity retention, as well as suppressed Li precipitation.

In contrast, for example, as shown in FIG. 2, when the binder polymer has not only two linear functions, the first straight line L1 and the second straight line L'2, but also one or more other linear functions (three in the example shown in FIG. 2), which are determined under the above-described conditions, there are two or more inflection points (two, p1 and p2, in the example shown in FIG. 2) appearing during a neutralization reaction under the above-described conditions. Therefore, in the water dispersion of such a binder polymer, the components neutralized by the hydrochloric acid aqueous solution change two or more times.

More precisely, in the example shown in FIG. 2, it is inferred that, in the neutralization reaction from the start

of addition of the hydrochloric acid aqueous solution to the inflection point p1, a first neutralization reaction and a second neutralization reaction caused by an anionic functional group of binder polymer (P) occur similarly to the binder polymer (P) of the present embodiment. However, in the neutralization reaction from the appearance of the inflection point p1 to the appearance of the inflection point p2, unlike the binder polymer (P) of the present embodiment, not only the first neutralization reaction but also a third neutralization reaction is inferred to occur due to release of the anionic functional group such as -COOH of the binder polymer (P), which is likely present on the outermost surface of particles consisting of the binder polymer, into the water dispersion. In addition, in the neutralization reaction from the appearance of the inflection point p2 until the measurement values of the electrical conductivities y (S/m) reach 2.0 S/m, it is inferred that only the first neutralization reaction occurs, because the anionic functional group released from the binder polymer (P) which can be neutralized in the third neutralization reaction no longer exists .

From these facts, it is inferred that, in the binder polymer with two or more inflection points that appear during the neutralization reaction under the above-described conditions, the anionic functional group such as -COOH is released from the outermost surface of the binder polymer into the water dispersion, when the binder polymer is dispersed in an aqueous medium. Therefore, it is inferred that, in a nonaqueous secondary battery (for example, a lithium-ion secondary battery) having a nonaqueous secondary battery electrode (for example, a negative electrode) containing the above-described binder polymer having two or more inflection points, Li ions are likely to be collected locally in the negative electrode and likely to precipitate, the internal resistance (DCR) becomes high, and the capacity retention rate deteriorates.

Here, the binder polymer (P) of the present embodiment is not particularly limited as long as the above-described conditions are satisfied in a test relating to the above electrical conductivity. For example, it may be a particulate polymer or other forms of polymers.

It is preferable that the binder polymer (P) have, more specifically, a first structural unit derived from a monomer ($a_1$) shown below, a second structural unit derived from a monomer (a2) shown below, and a third structural unit derived from an internal cross-linking agent (a3) shown below. This polymer is also referred to as a binder polymer ($P_a$). This is because the binder polymer (P) of the present embodiment having only two linear functions, the first straight line L1 represented by Equation (1) and the second straight line L2 represented by Equation (2), determined under the above-described conditions is likely to be obtained.

The binder polymer ($P_a$) of this embodiment may contain a fourth structural unit derived from another monomer (a4) that does not correspond to any of the monomer (a1), the monomer (a2), or the internal cross-linking agent (a3).

[First structural unit]

The first structural unit in the binder polymer ($P_a$) of the present embodiment is derived from a monomer (a1).

The monomer (a1) is a nonionic (having neither an anionic functional group nor a cationic functional group) compound having only one ethylenically unsaturated bond. The monomer (a1) may be only one type of compound or may include two or more types of compounds.

The monomer (a1) is preferably at least any of a (meth)acrylic acid ester and an aromatic compound having an ethylenically unsaturated bond and more preferably includes both of them. A (meth)acrylic acid ester more preferably includes a (meth)acrylic acid alkyl ester.

The monomer (a1) preferably has neither a hydroxy group nor a cyano group and more preferably has no polar functional group to facilitate adjustment of the glass transition point of a copolymer and adjustment of hydrophilicity and hydrophobicity.

When the monomer (a1) contains a (meth)acrylic ester and an aromatic vinyl compound, the total content of the (meth)acrylic ester and the aromatic vinyl compound in the monomer (a1) is preferably 80 mass% or more, more preferably 90 mass% or more, and most preferably 100 mass%.

Examples of the (meth)acrylic acid alkyl esters contained in (meth)acrylic acid esters used in the monomer ($a_1$) include methyl (meth)acrylate, ethyl (meth)acrylate, n-propyl (meth)acrylate, isopropyl (meth)acrylate, n-butyl (meth)acrylate, tert-butyl (meth)acrylate, cyclohexyl (meth)acrylate, 2-ethylhexyl (meth)acrylate, isobornyl (meth)acrylate, lauryl (meth)acrylate, and stearyl (meth)acrylate. Among these, at least any of methyl (meth)acrylate and 2-ethylhexyl (meth)acrylate is preferably contained because in this case favorable polymerization stability is obtained during production of the binder polymer ($P_a$) and it is suitable for adjusting uneven distribution of anionic functional groups within particles of the binder polymer ($P_a$).

Examples of the aromatic compounds having ethylenically unsaturated bonds used in the monomer (a1) include styrene, t-butylstyrene, $\alpha$-methylstyrene, p-methylstyrene, and 1,1-diphenylethylene. When the monomer (a1) contains an aromatic compound having an ethylenically unsaturated bond, it is more preferable to contain at least any of styrene and $\alpha$-methylstyrene. In particular, it is still more preferable to contain styrene because in this case favorable polymerization stability is obtained during production of the binder polymer ($P_a$) and it is suitable for adjusting uneven distribution of anionic functional groups within particles of the binder polymer ($P_a$).

The monomer (a1) is not limited to these above-mentioned compounds, and examples thereof include aliphatic hydrocarbon compounds having ethylenically unsaturated bonds and alicyclic hydrocarbon compounds having ethylenically unsaturated bonds.

For the composition of the monomer (a1), it is preferable to appropriately adjust preferred compounds and their contents within the range specified in the present embodiment to adjust the glass transition point of the binder polymer ($P_a$) or the polymerization rate according to the molecular design.

[Second structural unit]

The second structural unit in the binder polymer ($P_a$) of the present embodiment is derived from a monomer (a2).

The monomer (a2) is a compound having only one ethylenically unsaturated bond and an anionic functional group. The monomer (a2) may be only one type of compound or may include two or more types of compounds.

Examples of the anionic functional groups possessed by the monomer (a2) include a carboxy group, a sulfo group, and a phosphate group. The monomer (a2) preferably contains a compound having at least any of a carboxy group or a sulfo group and more preferably contains both a compound having a carboxy group and a compound having a sulfo group, because in this case favorable polymerization stability is obtained during production of the binder polymer ($P_a$) and it is suitable for adjusting uneven distribution of anionic functional groups within particles of the binder polymer ($P_a$).

The monomer (a2) may contain compounds having a plurality of anionic functional groups of the same type in one molecule. In other words, the binder polymer ($P_a$) may contain a plurality of anionic functional groups of the same type in one structural unit. The monomer (a2) may contain a compound having two or more different types of anionic functional groups in one molecule. In other words, the binder polymer ($P_a$) may contain two or more different types of anionic functional groups in one structural unit. In addition, the monomer (a2) may contain two or more compounds containing different anionic functional groups. In other words, the binder polymer ($P_a$) may contain two or more structural units containing different anionic functional groups.

Examples of the monomer (a2) include unsaturated monocarboxylic acids such as methacrylic acid and crotonic acid; and unsaturated dicarboxylic acids such as fumaric acid. Among these, the monomer (a2) preferably contains at least one of methacrylic acid, fumaric acid, and crotonic acid because in this case carboxy groups (-COOH) originating from the binder polymer ($P_a$) are likely to be unevenly distributed within particles consisting of the binder polymer ($P_a$) and difficult to be released in a water dispersion when the binder polymer ($P_a$) is dispersed in the aqueous medium. In particular, it is particularly preferable to contain methacrylic acid because in this case favorable polymerization stability is obtained during production of the binder polymer ($P_a$) and it is suitable for adjusting uneven distribution of an anionic functional group within particles of the binder polymer ($P_a$).

At least some of the structural units derived from the monomer (a2) may form salts with basic substances. Examples of the monomer (a2) forming salts include sodium (meth)acrylate and sodium para-styrenesulfonate.

The monomer (a2) preferably contains at least any of a sulfonic acid having an ethylenically unsaturated bond and a salt thereof, and more preferably contains a sulfonate having an ethylenically unsaturated bond. As the sulfonic acid, an aromatic vinyl compound with a sulfo group is preferably contained and para-styrenesulfonic acid is more preferably contained. As the sulfonate, a salt of an aromatic vinyl compound having a sulfo group is preferably contained, para-styrene sulfonate is more preferably contained, and sodium para-styrenesulfonate is still more preferably contained to obtain favorable polymerization stability during production of the binder polymer ($P_a$).

[Third structural unit]

The third structural unit in the binder polymer ($P_a$) of the present embodiment is derived from an internal cross-linking agent (a3).

The internal cross-linking agent (a3) is a compound having a plurality of independent ethylenically unsaturated bonds. In the present embodiment, the internal cross-linking agent (a3) is a compound capable of forming a cross-linked structure in radical polymerization of monomers including the monomer (a1) and the monomer (a2). As the internal cross-linking agent (a3), only one type of compound may be used or two or more different types of compounds may be used.

Examples of the internal cross-linking agent (a3) include compounds having two ethylenically unsaturated bonds such as divinylbenzene, ethylene glycol di(meth)acrylate, 1,6-hexanediol di(meth)acrylate, and 2-hydroxy-3-acryloyloxypropyl methacrylate, and compounds having three or more ethylenically unsaturated bonds such as trimethylolpropane tri(meth)acrylate. The internal cross-linking agent (a3) preferably includes at least any of divinylbenzene and trimethylolpropane tri(meth)acrylate, because in this case favorable polymerization stability is obtained during production of the binder polymer ($P_a$) and it is suitable for adjusting uneven distribution of anionic functional groups within particles of the binder polymer ($P_a$).

[Fourth structural unit]

The fourth structural unit which the binder polymer ($P_a$) of the present embodiment may have is derived from another monomer (a4).

The other monomer (a4) does not correspond to any of the monomer (a1), the monomer (a2) or the internal cross-linking agent (a3). Examples of the other monomer (a4) includes, but not limited to, a compound having an ethylenically unsaturated bond and a polar functional group, a surfactant having an ethylenically unsaturated bond (hereinafter, referred to as "polymerizable surfactants"), and a compound having an ethylenically unsaturated bond and functioning as a silane coupling agent.

As the polar functional group in the compound having an ethylenically unsaturated bond and a polar functional group, at least any of a hydroxy group and a cyano group is preferably contained, and a hydroxy group is more preferably contained.

Examples of the compound having an ethylenically unsaturated bond and a polar functional group include 2-hydroxyethyl (meth)acrylate, 2-hydroxypropyl (meth)acrylate, and (meth)acrylonitrile, and preferably include 2-hydroxyethyl (meth)acrylate.

As the polymerizable surfactant that is an example of the other monomer (a4), a compound having an ethylenically unsaturated bond and functioning as a surfactant can be used.

Examples of the polymerizable surfactant include compounds represented by Chemical Formulae (1) to (4) below.

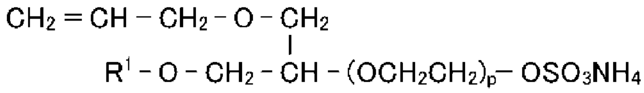

(1)

In Formula (1), $R^1$ is an alkyl group. p is an integer of 10 to 40. $R^1$ is preferably an alkyl group having 10 to 40 carbon atoms, and more preferably a linear unsubstituted alkyl group having 10 to 40 carbon atoms.

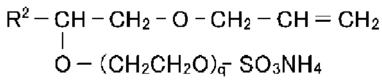

(2)

In Formula (2), $R^2$ is an alkyl group. p is an integer of 10 to 12. $R^2$ is preferably an alkyl group having 10 to 40 carbon atoms, and more preferably a linear unsubstituted alkyl group having 10 to 40 carbon atoms. Examples of the compound represented by Formula (2) include polyoxyethylene alkyl ether sulfate ester salts (manufactured by Dai-Ichi Kogyo Seiyaku Co., Ltd., Aquaron KH-10).

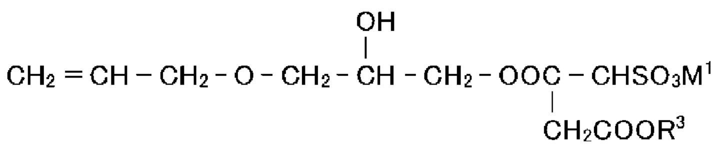

(3)

In Formula (3), $R^3$ is an alkyl group. $M^1$ is $NH_4$ or Na. $R^3$ is preferably an alkyl group having 10 to 40 carbon atoms, and more preferably a linear unsubstituted alkyl group having 10 to 40 carbon atoms.

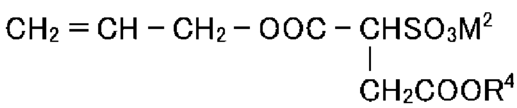

(4)

In Formula (4), $R^4$ is an alkyl group. $M^2$ is $NH_4$ or Na. $R^4$ is preferably an alkyl group having 10 to 40 carbon atoms, and more preferably a linear unsubstituted alkyl group having 10 to 40 carbon atoms. Examples of the compound represented by Formula (4) include sodium alkyl allyl sulfosuccinate (manufactured by Sanyo Chemical Industries, Ltd., Eleminol JS-20).

Examples of the compound having an ethylenically unsaturated bond and functioning as a silane coupling agent include vinyltrimethoxysilane, γ-methacryloxypropyltrimethoxysilane, vinyltriethoxysilane, and γ-methacryloxypropyltriethoxysilane.

[Content of each structural unit in binder polymer ($P_a$)]

The total content of the first structural unit and the second structural unit in the binder polymer ($P_a$) of the present embodiment is preferably 80 mass% or more, more preferably 85 mass% or more, and still more preferably 90 mass% or more. This is because, by increasing the content of the first structural unit and the second structural unit in the binder polymer ($P_a$), favorable polymerization stability is obtained during production of the binder polymer ($P_a$) and it is suitable for adjusting uneven distribution of anionic functional groups within particles of the binder polymer ($P_a$).

In the binder polymer ($P_a$) of the present embodiment, the content of the second structural unit derived from the monomer (a2) based on 100 parts by mass of the first structural unit derived from the monomer (a1) is preferably 1.0 parts by mass or more, more preferably 1.5 parts by mass or more, and still more preferably 3.0 parts by mass or more. This is because favorable polymerization stability is obtained during production of the binder polymer ($P_a$), and the binder polymer ($P_a$) becomes suitable for adjusting uneven distribution of anionic functional groups within particles thereof.

In the binder polymer ($P_a$) of the present embodiment, the content of the second structural unit derived from the monomer (a2) based on 100 parts by mass of the first structural unit derived from the monomer (a1) is preferably 30 parts by mass or less, more preferably 15 parts by mass or less, and still more preferably 7.5 parts by mass or less. This is because favorable polymerization stability is obtained during production of the binder polymer ($P_a$), and the binder polymer ($P_a$) becomes suitable for adjusting uneven distribution of anionic functional groups within particles thereof.

In the binder polymer ($P_a$) of the present embodiment, the content of the third structural unit derived from the internal cross-linking agent (a3) based on 100 parts by mass of the first structural unit derived from the monomer (a1) is preferably 0.050 parts by mass or more, more preferably 0.075 parts by mass or more, and still more preferably 0.50 parts by mass or more. This is because the binder polymer ($P_a$) suppresses degradation of the binder polymer ($P_a$) and can be used as a material for binders from which nonaqueous secondary batteries with excellent cycle characteristics can be obtained.

In the binder polymer ($P_a$) of the present embodiment, the content of the third structural unit derived from the internal cross-linking agent (a3) based on 100 parts by mass of the first structural unit derived from the monomer (a1) is preferably 20 parts by mass or less, more preferably 7.5 parts by mass or less, and still more preferably 2.5 parts by mass or less. This is because gelation of the binder polymer ($P_a$) can be suppressed.

When the binder polymer ($P_a$) of the present embodiment contains the fourth structural unit derived from the polymerizable surfactant that is the other monomer (a4), the content of the fourth structural unit derived from the other monomer (a4) based on 100 parts by mass of the first structural unit derived from the monomer (a1) is preferably 0.050 parts by mass or more, more preferably 0.075 parts by mass or more, and still more preferably 0.50 parts by mass or more. This is because favorable polymerization stability is obtained during production of the binder polymer ($P_a$), and the binder polymer ($P_a$) becomes suitable for adjusting uneven distribution of anionic functional groups within particles thereof.

When the binder polymer ($P_a$) of the present embodiment contains the fourth structural unit derived from the polymerizable surfactant that is the other monomer (a4), the content of the fourth structural unit derived from the other monomer (a4) based on 100 parts by mass of the first structural unit derived from the monomer (a1) is preferably 30 parts by mass or less, more preferably 15 parts by mass or less, and still more preferably 7.5 parts by mass or less. This is because the particle diameter, viscosity, and other factors of the binder polymer (P) can be appropriately adjusted.

[Glass transition point Tg of binder polymer ($P_a$)]

The glass transition point Tg of the binder polymer ($P_a$) of the present embodiment is the peak top temperature of a DDSC chart obtained as the temperature derivative of DSC through DSC measurement using a differential scanning calorimetry (DSC) device (manufactured by Hitachi High-Tech Corporation, EXSTAR DSC/SS7020) at a temperature increase rate of 10°C/min in a nitrogen gas atmosphere.

The glass transition point Tg of the binder polymer ($P_a$) is preferably -30°C or higher, more preferably -10°C or higher, and still more preferably 0°C or higher. This is because a nonaqueous secondary battery including an electrode containing a binder for nonaqueous secondary batteries containing the binder polymer ($P_a$) has excellent cycle characteristics.

The glass transition point Tg of the binder polymer ($P_a$) is preferably 100°C or lower, more preferably 50°C or lower, and still more preferably 40°C or lower. This is because the film formability of the binder polymer ($P_a$) is improved, and the nonaqueous secondary battery including an electrode containing a binder for nonaqueous secondary batteries containing the binder polymer ($P_a$) has excellent cycle characteristics.

[Method for producing binder polymer ($P_a$)]

The binder polymer ($P_a$) as one embodiment is obtained through copolymerizing monomers including the monomer (a1), the monomer (a2), and the internal cross-linking agent (a3) and including the other monomer (a4) as necessary. The monomers (components (a1) to (a4)) used for synthesizing the binder polymer ($P_a$) are sometimes collectively referred to as monomers (a).

Examples of methods for copolymerizing monomers (a) include an emulsion polymerization method, in which the monomers (a) are emulsified and polymerized in an aqueous medium (b). When producing the binder polymer ($P_a$) through an emulsion polymerization method, components such as a surfactant (c) having no polymerizability, a basic substance (d), a radical polymerization initiator (e), and a chain transfer agent (f) can be used in addition to the monomers (a) and the aqueous medium (b).

[Aqueous medium (b)]

An aqueous medium (b) is one selected from the group consisting of water, a hydrophilic solvent, and a mixture containing water and a hydrophilic solvent. Examples of the hydrophilic solvent include methanol, ethanol, isopropyl alcohol, and N-methylpyrrolidone. The aqueous medium (b) is preferably water from the viewpoint of polymerization stability. As the aqueous medium (b), a mixture of water with a hydrophilic solvent may be used, as long as the polymerization stability is not impaired.

[Surfactant (c) having no polymerizability]

When producing a binder polymer ($P_a$) through an emulsion polymerization method, a surfactant (c) having no polymerizability may be contained in a solution containing an aqueous medium (b) and monomers (a) for emulsion polymerization. The surfactant (c) without polymerizability is, in other word, a surfactant (c) having no ethylenically unsaturated bond in its chemical structure. The surfactant (c) improves dispersion stability of a solution during emulsion polymerization and/or a dispersion (emulsion) obtained after polymerization. As the surfactant (c), an anionic surfactant and a nonionic surfactant are preferably used.

Examples of the anionic surfactant include alkyl benzene sulfonates, alkyl sulfate ester salts, polyoxyethylene alkyl ether sulfate ester salts, and fatty acid salts.

Examples of the nonionic surfactant include polyoxyethylene alkyl ethers, polyoxyethylene alkyl phenyl ethers, polyoxyethylene polycyclic phenyl ethers, polyoxyalkylene alkyl ethers, sorbitan fatty acid esters, polyoxyethylene sorbitan fatty acid esters.

The above-described surfactant (c) may be used alone, or a combination of two or more kinds thereof may be used.

[Basic substance (d)]

When producing the binder polymer (Pa) through an emulsion polymerization method, a basic substance (d) may be added to a solution containing an aqueous medium (b) and monomers (a) to be subjected to emulsion polymerization and/or a dispersion obtained after the emulsion polymerization. The addition of the basic substance (d) neutralizes acidic components contained in the monomers (a). As a result, the pH of the solution during emulsion polymerization and/or the dispersion after emulsion polymerization falls within an appropriate range, and the stability of the solution during emulsion polymerization and/or the dispersion after emulsion polymerization becomes favorable.

When a slurry containing an electrode active material and a binder for nonaqueous secondary batteries containing the binder polymer ($P_a$) is used to produce an electrode, the pH at 23°C of the dispersion after emulsion polymerization is preferably 1.5 to 10, more preferably 6.0 to 9.0, and still more preferably 5.0 to 9.0. This is because the electrode active material can be prevented from precipitating in the slurry containing the electrode active material and the binder for nonaqueous secondary batteries.

Examples of the basic substance (d), which is added to the solution to be subjected to emulsion polymerization and/or to the dispersion after emulsion polymerization, include ammonia, triethylamine, sodium hydroxide, and lithium hydroxide. These basic substances (d) may be used alone, or a combination of two or more kinds thereof may be used.

[Radical polymerization initiator (e)]

The radical polymerization initiator (e), which is used when producing the binder polymer ($P_a$) through an emulsion polymerization method, is not particularly limited, and well-known ones can be used. Examples of the radical polymerization initiator (e) include persulfates such as ammonium persulfate and potassium persulfate; hydrogen peroxide; azo compounds; and organic peroxides such as tert-butyl hydroperoxide, tert-butyl peroxybenzoate, and cumene hydroperoxide. As the radical polymerization initiator (e), persulfates and organic peroxides are preferably used.

In the present embodiment, when producing the binder polymer ($P_a$) through an emulsion polymerization method, a reducing agent such as sodium bisulfite, rongalite, or ascorbic acid may be used in combination with the radical polymerization initiator (e) for redox polymerization.

The amount of radical polymerization initiator (e) added (including a reducing agent when used in combination) is preferably 0.001 parts by mass or more and more preferably 0.005 parts by mass or more based on 100 parts by mass of the monomers (a). This is because the conversion rate of the monomers (a) to the binder polymer ($P_a$) can be increased when producing the binder polymer (Pa) through an emulsion polymerization method. The amount of radical polymerization initiator (e) added is preferably 10 parts by mass or less and more preferably 5 parts by mass or less based on 100 parts by mass of the monomers (a). This is because the molecular weight of the binder polymer ($P_a$) can be increased, and the swelling ratio of the nonaqueous secondary battery electrode containing the binder polymer (Pa) of the present embodiment with respect to an electrolyte can be reduced.

[Chain transfer agent (f)]

A chain transfer agent (f) used when producing the binder polymer ($P_a$) through an emulsion polymerization method is used to adjust the molecular weight of the binder polymer ($P_a$) obtained through emulsion polymerization. Examples of the chain transfer agent (f) include n-dodecyl mercaptan, tert-dodecyl mercaptan, n-butyl mercaptan, 2-ethylhexyl thioglycolate, 2-mercaptoethanol, β-mercaptopropionic acid, methyl alcohol, n-propyl alcohol, isopropyl alcohol, t-butyl alcohol, and benzyl alcohol.

[Emulsion polymerization method]

Examples of emulsion polymerization methods used when producing the binder polymer ($P_a$) include an emulsion polymerization method which is performed while continuously supplying each component used in the emulsion polymerization in a reaction container. The temperature for emulsion polymerization is not limited, but is, for example, 30°C to 90°C, preferably 50°C to 85°C, and still more preferably 55°C to 85°C. Emulsion polymerization is preferably performed with stirring. In addition, it is preferable to continuously supply monomers (a) and a radical polymerization initiator (e) to a solution during emulsion polymerization so that the concentration of the monomers (a) and the radical polymerization initiator (e) in the solution during emulsion polymerization becomes uniform.

<2. Binder for nonaqueous secondary batteries>

The binder for nonaqueous secondary batteries of the present embodiment contains the binder polymer (P) of the present embodiment. The electrode binder for nonaqueous secondary batteries may contain other components together with the binder polymer (P). Specifically, the electrode binder for nonaqueous secondary batteries may contain, for example, a surfactant, polymers other than the binder polymer (P) and the like.

The binder for nonaqueous secondary batteries consists of components that remain without volatilizing after a step which involves heating in a method for producing a nonaqueous secondary battery to be described below. Specifically, the components constituting the binder for nonaqueous secondary batteries are components that remain after processing, wherein 1 g of the binder composition for nonaqueous secondary batteries containing the binder polymer (P) is weighed and placed on a 5 cm diameter aluminum plate, and then the binder composition is entered in a dryer and dried at 1 atm (1013 hPa) and at a temperature of 105°C for 1 hour while the air inside the dryer is circulated.

The content of the binder polymer (P) contained in the binder for nonaqueous secondary batteries is preferably 80 mass% or more, more preferably 90 mass% or more, still more preferably 95 mass% or more, and still more preferably 98 mass% or more. This is because the effect of incorporating the binder polymer (P) is significant.

<3. binder composition for nonaqueous secondary batteries>

The binder composition for nonaqueous secondary batteries of the present embodiment contains the binder polymer (P) of the present embodiment and an aqueous medium (B). The binder composition for nonaqueous secondary batteries preferably has the binder polymer (P) dispersed in the aqueous medium (B). The binder composition for nonaqueous secondary batteries may contain other components such as various additives together with the binder polymer (P) and the aqueous medium (B). Specifically, the binder composition for nonaqueous secondary batteries may contain, for example, the above-described components used for synthesis of the binder polymer (P).

The binder composition for nonaqueous secondary batteries of the present embodiment may be a dispersion obtained by producing the binder polymer (P) through an emulsion polymerization method. In addition, the binder composition for nonaqueous secondary batteries of the present embodiment may be a dispersion obtained by dispersing the binder polymer (P) obtained through a method other than the emulsion polymerization method in the aqueous medium (B). In this case, well-known methods can be used to disperse the binder polymer (P) in the aqueous medium (B).

[Aqueous medium (B)]

The aqueous medium (B) in the binder composition for nonaqueous secondary batteries of the present embodiment is water, a hydrophilic solvent, or a mixture thereof. Examples of hydrophilic solvents include the same ones as the hydrophilic solvents exemplified as the aqueous medium (b) used for synthesis of the binder polymer (P). The aqueous medium (B) may be the same as or different from the aqueous medium (b) used for synthesis of the binder polymer (P).

When the binder composition for nonaqueous secondary batteries is a dispersion obtained by producing the binder polymer (P) through an emulsion polymerization method, the aqueous medium (B) may be the aqueous medium (b) used for synthesis of the binder polymer (P). In addition, the aqueous medium (B) may be one obtained by adding a new aqueous medium to the aqueous medium (b) used for synthesis of the binder polymer (P). In addition, the aqueous medium (B) may be made by replacing some or all of the aqueous medium (B), which is contained in the dispersion obtained by producing the binder polymer (P) through an emulsion polymerization method, with a new aqueous solvent. The new aqueous medium used in this case may have the same composition as the aqueous medium (b) used for synthesis of the binder polymer (P) or may have a different composition therefrom.

[Nonvolatile content concentration of binder composition for nonaqueous secondary batteries]

The nonvolatile content concentration of the binder composition for nonaqueous secondary batteries of the present embodiment is preferably 20 mass% or more, more preferably 25 mass% or more, and still more preferably 30 mass% or more. This is to increase the amount of active components contained in the binder composition for nonaqueous secondary batteries. The nonvolatile content concentration of the binder composition for nonaqueous secondary batteries can be adjusted by the amount of the aqueous medium (B) contained in the binder composition for nonaqueous secondary batteries.

The nonvolatile content concentration of the binder composition for nonaqueous secondary batteries is preferably 80 mass% or less, more preferably 70 mass% or less, and still more preferably 60 mass% or less. This is because the increase in viscosity of the binder composition for nonaqueous secondary batteries is suppressed and a slurry for nonaqueous secondary battery electrodes is likely to be produced.

<4. Slurry for nonaqueous secondary battery electrodes>

Next, a slurry for nonaqueous secondary battery electrodes of the present embodiment will be described in detail. The slurry for nonaqueous secondary battery electrodes contains the binder polymer (P) of the present embodiment, an electrode active material, and an aqueous medium. The electrode active material and the binder polymer (P) contained in the slurry for nonaqueous secondary battery electrodes are preferably dispersed in the aqueous medium. In addition to the binder polymer (P), the electrode active material, and the aqueous medium, the slurry for nonaqueous secondary battery electrodes may contain a thickener, a conductive assistant, and the aforementioned components which are used for synthesis of the binder polymer (P).

[Content of binder polymer (P)]

The content of the binder polymer (P) contained in the slurry for nonaqueous secondary battery electrodes based on 100 parts by mass of the electrode active material is preferably 0.50 parts by mass or more and more preferably 1.0 parts by mass or more. This is because the effect of incorporating the binder polymer (P) is sufficiently exhibited.

The content of the binder polymer (P) contained in the slurry for nonaqueous secondary battery electrodes based on 100 parts by mass of the electrode active material is preferably 5.0 parts by mass or less, more preferably 4.0 parts by mass or less, and still more preferably 3.0 parts by mass or less. This is because the amount of the electrode active material contained in the slurry for nonaqueous secondary battery electrodes can be increased.

[Electrode active material]

The electrode active material contained in the slurry for nonaqueous secondary battery electrodes is a material that can intercalate and deintercalate ions that serve as charge carriers, such as lithium ions. The ions that serve as charge carriers are preferably alkali metal ions, more preferably lithium ions, sodium ions, and potassium ions, and still

more preferably lithium ions.

When a nonaqueous secondary battery electrode which is produced using the slurry for nonaqueous secondary battery electrodes is a negative electrode, the electrode active material is a negative electrode active material. The negative electrode active material preferably includes at least any of a carbon material, a silicon-containing material, and a titanium-containing material. Examples of carbon materials used as negative electrode active materials include coke such as petroleum coke, pitch coke, and coal coke, carbon materials of organic polymers, and graphite such as artificial graphite and natural graphite. Examples of silicon-containing materials used as negative electrode active materials include silicon alone and silicon compounds such as silicon oxide. Examples of titanium-containing materials used as negative electrode active materials include lithium titanate. Such materials used as negative electrode active materials may be used alone or may be mixed or compounded together.

A negative electrode active material preferably includes at least any of a carbon material and a silicon-containing material, and more preferably includes a carbon material. This is because the binder polymer (P) contained in the slurry for nonaqueous secondary battery electrodes is highly effective in improving the binding properties between the negative electrode active materials, and between the negative electrode active materials and a current collector.

When a nonaqueous secondary battery electrode produced using the slurry for nonaqueous secondary battery electrodes is a positive electrode, the electrode active material is a positive electrode active material. As a positive electrode active material, a material with a nobler standard electrode potential than a negative electrode active material is used. Specific examples of positive electrode active materials include lithium composite oxides containing nickel, such as Ni-Co-Mn-based lithium composite oxides, Ni-Mn-Al-based lithium composite oxides, and Ni-Co-Al-based lithium composite oxides, lithium cobaltate ($LiCoO_2$), spinel-type lithium manganate ($LiMn_2O_4$), olivine-type lithium iron phosphate, and chalcogen compounds such as $TiS_2$, $MnO_2$, $MoO_3$, and $V_2O_5$. These substances used as positive electrode active materials may be used alone, or a combination of two or more kinds thereof may be used.

[Aqueous medium]

The aqueous medium contained in the slurry for nonaqueous secondary battery electrodes of the present embodiment is one selected from the group consisting of water, a hydrophilic solvent, and a mixture containing water and a hydrophilic solvent. Examples of hydrophilic solvents include the same ones as the hydrophilic solvents exemplified as the aqueous medium (b) used for synthesis of the binder polymer (P). The aqueous medium contained in the slurry for nonaqueous secondary battery electrodes may be the same as or different from the aqueous medium (b) used for synthesis of the binder polymer (P).

[Thickener]

Examples of thickeners that may be contained in the slurry for nonaqueous secondary battery electrodes include celluloses such as carboxymethyl cellulose (CMC), hydroxyethyl cellulose, and hydroxypropyl cellulose, ammonium salts of celluloses, alkali metal salts of celluloses, polyvinyl alcohol, and polyvinyl pyrrolidone.

Thickeners preferably include at least any of carboxymethyl cellulose, an ammonium salt of carboxymethyl cellulose, and an alkali metal salt of carboxymethyl cellulose. This is because the electrode active material in the slurry for nonaqueous secondary battery electrodes is likely to be dispersed.

The content of the thickener contained in the slurry for nonaqueous secondary battery electrodes based on 100 parts by mass of the electrode active material is preferably 0.50 parts by mass or more and more preferably 0.80 parts by mass or more. This is because the binding properties become favorable between the electrode active materials contained in the nonaqueous secondary battery electrode which is produced using the slurry for nonaqueous secondary battery electrodes, and between the electrode active materials and a current collector. The content of the thickener contained in the slurry for nonaqueous secondary battery electrodes based on 100 parts by mass of the electrode active material is preferably 3.0 parts by mass or less, more preferably 2.0 parts by mass or less, and still more preferably 1.5 parts by mass or less. This is because the slurry for nonaqueous secondary battery electrodes has favorable coatability.

[Conductive assistant]

Examples of conductive assistants which may be contained in the slurry for nonaqueous secondary battery electrodes of the present embodiment include carbon black and carbon fibers. Examples of carbon black include furnace black, acetylene black, Denka Black (registered trademark) (manufactured by Denka Company Limited), and Ketjen black (registered trademark) (manufactured by Ketjen Black International Company). Examples of carbon fibers include carbon nanotubes and carbon nanofibers. Preferred examples carbon nanotubes include VGCF (registered trademark, manufactured by Showa Denko K.K.) which is vapor grown carbon fiber.

[Properties of slurry for nonaqueous secondary battery electrodes]

The nonvolatile content concentration of slurry for nonaqueous secondary battery electrodes is preferably 20 mass% or more, more preferably 30 mass% or more, and still more preferably 40 mass% or more. This is because the concentration of active components in the slurry for nonaqueous secondary battery electrodes becomes higher, and a nonaqueous secondary battery electrode can be formed with a smaller amount. The nonvolatile content concentration of the slurry for nonaqueous secondary battery electrodes can be adjusted by the amount of aqueous medium contained in the slurry for nonaqueous secondary battery electrodes.

The nonvolatile content concentration of the slurry for nonaqueous secondary battery electrodes is preferably 85 mass% or less, more preferably 75 mass% or less, and still more preferably 65 mass% or less. This is because the slurry for nonaqueous secondary battery electrodes has favorable coatability.

The viscosity of the slurry for nonaqueous secondary battery electrodes is preferably 20,000 mPa·s or less, more preferably 10,000 mPa·s or less, and still more preferably 5,000 mPa·s or less. This is because the coatability of the slurry for nonaqueous secondary battery electrodes on a current collector becomes favorable, and the productivity of a nonaqueous secondary battery electrode is improved. The viscosity of the slurry for nonaqueous secondary battery electrodes can be adjusted according to the nonvolatile content concentration of the slurry for nonaqueous secondary battery electrodes and the type and amount of thickener.

The pH of the slurry for nonaqueous secondary battery electrodes can be appropriately adjusted according to the specifications and other factors of the nonaqueous secondary battery electrode. Although there is no restriction, the pH thereof at 23°C is preferably 2.0 to 10, more preferably 4.0 to 9.0, and still more preferably 6.0 to 9.0. This is because the durability of a nonaqueous secondary battery including the nonaqueous secondary battery electrode produced using the slurry for nonaqueous secondary battery electrodes becomes favorable.

[Method for producing slurry for nonaqueous secondary battery electrodes]

Examples of a method for producing the slurry for nonaqueous secondary battery electrodes of the present embodiment include, but are not limited to, a method of mixing the binder polymer (P) of the present embodiment, an electrode active material, an aqueous medium, a thickener incorporated as necessary, a conductive assistant incorporated as necessary, and other components incorporated as necessary. The mixing order of the components which are raw materials for the slurry for nonaqueous secondary battery electrodes is not particularly limited and can be appropriately determined. Examples of the method of mixing the components with each other include methods of using a mixing device such as stirring-type, rotary-type, or shaking-type.

<5. Nonaqueous secondary battery electrode>

Next, a nonaqueous secondary battery electrode of the present embodiment (hereinafter sometimes referred to as an "electrode") will be described in detail. The electrode of the present embodiment contains the binder polymer (P) of the present embodiment. The electrode of the present embodiment includes a current collector and an electrode active material layer formed on the current collector. Examples of the shape of the electrode of the present embodiment include, but are not particularly limited to, a laminate or a roll. The range of formation of an electrode active material layer on a current collector is not particularly limited, and the electrode active material layer may be formed on the entire surface of the current collector or only on a part of the surface on the current collector. When the current collector is in the form of a plate, foil, or the like, the electrode active material layer may be formed on both surfaces or only a single surface of the current collector.

[Current collector]

The current collector is preferably a metal sheet of 0.001 mm to 0.5 mm thick. Examples of metals forming a metal sheet include iron, copper, aluminum, nickel, and stainless steel. When the electrode of the present embodiment is a negative electrode of a lithium-ion secondary battery, the current collector is preferably a copper foil.

[Electrode active material layer]

The electrode active material layer contains the binder polymer (P) of the present embodiment and an electrode active material. The electrode active material layer may contain a conductive assistant, a thickener, and the like. The electrode active material, the conductive assistant, and the thickener used can all be the same as those provided as exemplary components of the slurry for nonaqueous secondary battery electrodes.

[Method for producing nonaqueous secondary battery electrode]

An electrode of the present embodiment can be produced through, for example, a method shown below. First, the slurry for nonaqueous secondary battery electrodes of the present embodiment is applied onto a current collector. The slurry for nonaqueous secondary battery electrodes is then dried. As a result, an electrode active material layer containing a binder polymer (P) is formed on the current collector to make an electrode sheet. Thereafter, if necessary, the electrode sheet is cut into an appropriate size. By performing the above-described process, an electrode of the present embodiment is obtained.

Examples of methods of applying the slurry for nonaqueous secondary battery electrodes onto a current collector include, but are not particularly limited to, a reverse roll method, direct roll method, a doctor blade method, a knife method, an extrusion method, a curtain method, a gravure method, a bar method, a dipping method, and a squeeze method. Among these application methods, considering the drying properties and various physical properties, such as viscosity, of the slurry for nonaqueous secondary battery electrodes, it is preferable to use any one selected from a doctor blade method, a knife method, or an extrusion method. This is because an electrode active material layer having a smooth surface and small thickness variation is obtained.

When the slurry for nonaqueous secondary battery electrodes is applied onto both surfaces of a current collector, it may be applied sequentially on one surface at a time or simultaneously to both surfaces. In addition, the slurry for nonaqueous secondary battery electrodes may be applied continuously or intermittently onto the current collector.

The amount of slurry for nonaqueous secondary battery electrodes applied can be appropriately determined depending on the design capacity of a battery, the composition of the slurry for nonaqueous secondary battery electrodes, and the like.

A method for drying the slurry for nonaqueous secondary battery electrodes applied onto the current collector is not particularly limited, but a method selected from, for example, methods using hot air, reduced pressure or vacuum environment, (far) infrared rays, or low-temperature air, can be used alone or in combination.

The drying temperature and drying time when drying the slurry for nonaqueous secondary battery electrodes can be appropriately adjusted according to the nonvolatile content concentration in the slurry for nonaqueous secondary battery electrodes, the application amount onto the current collector, and the like. The drying temperature is preferably 40°C to 350°C, and is more preferably 60°C to 100°C, from the viewpoint of productivity. The drying time is preferably 1 minute to 30 minutes.

The electrode sheet having the electrode active material layer formed on the current collector may be cut so that it has an appropriate size and shape as an electrode. The method for cutting the electrode sheet is not particularly limited, and, for example, a slit, a laser, wire cutting, a cutter, Thomson, and the like can be used.

In the present embodiment, the electrode sheet may be pressed as necessary before or after cutting the electrode sheet. This allows the electrode active material to be firmly bound to a current collector and the electrode thickness to be reduced, making a nonaqueous secondary battery smaller.

General methods can be used as methods for pressing the electrode sheet. A die press method or a roll press method is particularly preferably used as a pressing method.

When the die press method is used, the pressing pressure is not particularly limited, but is preferably set to 0.5 $t/cm^2$ to 5 $t/cm^2$.

When the roll press method is used, the pressing load is not particularly limited, but is preferably set to 0.5 t/cm to 8 t/cm. This is because it is possible to suppress the decrease in insertion and desorption capacities of charge carriers such as lithium ions into the electrode active material while obtaining the above-described effects of pressing.

<6. Nonaqueous secondary battery>

Next, a lithium-ion secondary battery will be described as a preferred example of the nonaqueous secondary battery according to the present embodiment. The configuration of the nonaqueous secondary battery of the present embodiment is not limited to examples shown below.

The lithium-ion secondary battery of the present embodiment is one in which a positive electrode, a negative electrode, an electrolyte, and a well-known component such as a separator provided as needed are housed in an exterior body.

The shape of the lithium-ion secondary battery can be any shape, such as a coin type, a button type, a sheet type, a cylindrical type, a square type, of a flat type.

[Positive and negative electrodes]

In the lithium-ion secondary battery of the present embodiment, one or both of positive and negative electrodes contain the electrode active material layer of the present embodiment in which the binder polymer (P) of the present

embodiment is included. In the lithium-ion secondary battery of the present embodiment, it is preferable that, among the positive electrode and negative electrode, at least the negative electrode contains an electrode active material layer in which the binder polymer (P) is included.

In the lithium-ion secondary battery of the present embodiment, when only one electrode among the positive electrode and the negative electrode contains an electrode active material layer including the binder polymer (P) of the present embodiment, the other electrode is used which contains no binder polymer (P) of the present embodiment but includes a well-known binder such as polyvinylidene fluoride instead of the binder polymer (P) of the present embodiment.

[Electrolyte]

A nonaqueous liquid with ionic conductivity is used as an electrolyte. Examples of the electrolyte include a solution in which an electrolyte is dissolved in an organic solvent, and an ionic liquid, and the former is perferable. This is because it is possible to obtain a lithium-ion secondary battery with low production costs and low internal resistance.

Alkali metal salts can be used as electrolytes and can be appropriately selected depending on the type of electrode active material and other factors. Examples of electrolytes include $LiClO_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, LiCl, LiBr, $LiB(C_2H_5)_4$, $CF_3SO_3Li$, $CH_3SO_3Li$, $LiCF_3SO_3$, $LiC_4F_9SO_3$, $Li(CF_3SO_2)_2N$, and lithium aliphatic carboxylate. In addition, other alkali metal salts can also be used as electrolytes.

Examples of organic solvents dissolving an electrolyte include, but are not particularly limited to, carbonic acid ester compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC), nitrile compounds such as acetonitrile, and carbonic acid esters such as ethyl acetate, propyl acetate, methyl propionate, ethyl propionate, and propyl propionate. These organic solvents may be used alone or a combination of two or more kinds thereof may be used. Among these, a combination of linear carbonate-based solvents is preferably used as an organic solvent.

[Exterior body]

As an outer body, for example, one made of an aluminum laminate material consisting of aluminum foil and a resin film can be appropriately used, but there is no limitation.

[Examples]

Hereinafter, the present invention will be more specifically described using examples and comparative examples. The examples shown below are provided to facilitate understanding of the contents of the present invention. The present invention is not limited only to these examples.

In the following examples, a negative electrode of a lithium-ion secondary battery was manufactured as an example of a nonaqueous secondary battery electrode of the present invention, and a lithium-ion secondary battery was prepared as an example of a nonaqueous secondary battery. These were compared with a negative electrode of a lithium-ion secondary battery and the lithium-ion secondary battery according to each comparative example to confirm the effect of the present invention.

In addition, water used in the following examples and comparative examples is ion-exchanged water, unless otherwise specified.

<1. Production of binder polymer>

In a separable flask with a cooling tube, a thermometer, a stirrer, and a dropping funnel, 150 parts by mass of water was added and the temperature was raised to 80°C. In this separable flask, a monomer (a1) and a monomer (a2) shown in Table 1 or Table 2, an internal cross-linking agent (a3), a polymerizable surfactant (a4), which is another monomer, and a radical polymerization initiator (e) are continuously fed at ratios shown in Table 1 or Table 2 while stirring at 80°C for 3 hours to perform emulsion polymerization and obtain aqueous emulsions containing binder polymers of Examples 1 to 6 and Comparative Examples 1 to 3.

The obtained aqueous emulsions were cooled to room temperature, and 160 parts by mass of water and 25 mass% of ammonia water were added thereto. This produced binder compositions for nonaqueous secondary batteries of Examples 1 to 6 and Comparative Examples 1 to 3, in which each particulate binder polymer of Examples 1 to 6 and Comparative Examples 1 to 3 was dispersed in the aqueous medium (b).

[Table 1]

| | Component | | Compound name | Example 1 | | Example 2 | | Example 3 | | Example 4 | | Example 5 | | Example 6 | |
|---|---|---|---|---|---|---|---|---|---|---|---|---|---|---|---|
| | | | | | ※1 | | ※1 | | ※1 | | ※1 | | ※1 | | ※1 |
| Amount of components used in producing binder polymer (parts by mass) | Monomer (a) | Monomer (a1) | Styrene | 220 | 100 | 0 | 100 | 220 | 100 | 206 | 100 | 0 | 100 | 0 | 100 |
| | | | Methyl methacrylate | 0 | | 220 | | 0 | | 0 | | 220 | | 220 | |
| | | | n-Buthyl acrylate | 0 | | 0 | | 140 | | 77 | | 0 | | 0 | |
| | | | 2-Ethylhexyl acrylate | 140 | | 140 | | 0 | | 77 | | 140 | | 140 | |
| | | Monomer (a2) | Methacrylic acid | 20.0 | 5.56 | 20.0 | 5.56 | 20.0 | 5.56 | 20.0 | 5.56 | 20.0 | 5.56 | 0.0 | 0.00 |
| | | | Crotonic acid | 0.0 | 0.00 | 0.0 | 0.00 | 0.0 | 0.00 | 0.0 | 0.00 | 0.0 | 0.00 | 20.0 | 5.56 |
| | | | Acrylic acid | 0 | 0.00 | 0 | 0.00 | 0 | 0.00 | 0 | 0.00 | 0 | 0.00 | 0 | 0.00 |
| | | | Itaconic acid | 0 | 0.00 | 0 | 0.00 | 0 | 0.00 | 0 | 0.00 | 0 | 0.00 | 0 | 0.00 |
| | | | Sodium p-styrene sulfonate | 3.5 | 0.97 | 3.5 | 0.97 | 3.5 | 0.97 | 3.5 | 0.97 | 3.5 | 0.97 | 3.5 | 0.97 |
| | | Internal cross-linking agent (a3) | Divinylbenzene | 5.0 | 1.39 | 5.0 | 1.39 | 5.0 | 1.39 | 5.0 | 1.39 | 0.0 | 0.00 | 0.0 | 0.00 |
| | | | Trimethylolpropane triacrylate | 0.0 | 0.00 | 0.0 | 0.00 | 0.0 | 0.00 | 0.0 | 0.00 | 5.0 | 1.39 | 5.0 | 1.39 |
| | | Polymerizable surfactant (a4) | Polyoxyethylene alkyl ether sulfate ester salt | 2.5 | 0.69 | 2.5 | 0.69 | 2.5 | 0.69 | 2.5 | 0.69 | 2.5 | 0.69 | 2.5 | 0.69 |
| | Radical polymerization initiator (e) | Polymerization initiator (e-1) | Potassium persulfate | 2 | | 2 | | 2 | | 2 | | 2 | | 2 | |
| | | Polymerization initiator (e-2) | tert-Butyl peroxybenzoate | 1 | | 1 | | 1 | | 1 | | 1 | | 1 | |
| | | | Ascorbic acid | 0.5 | | 0.5 | | 0.5 | | 0.5 | | 0.5 | | 0.5 | |
| | | Polymerization initiator (e-3) | tert-Butyl hydroperoxide | 1 | | 1 | | 1 | | 1 | | 1 | | 1 | |
| | | | Ascorbic acid | 0.5 | | 0.5 | | 0.5 | | 0.5 | | 0.5 | | 0.5 | |
| | Basic substance (d) | | Ammonia | 4 | | 4 | | 4 | | 4 | | 4 | | 4 | |
| | Aqueous medium (b) | | Water | 600 | | 600 | | 600 | | 600 | | 600 | | 600 | |

(continued)

| | Component | Compound name | Example 1 | | Example 2 | | Example 3 | | Example 4 | | Example 5 | | Example 6 | |
|---|---|---|---|---|---|---|---|---|---|---|---|---|---|---|
| | | | | ※1 | | ※1 | | ※1 | | ※1 | | ※1 | | ※1 |
| Evaluation | Binder polymer (binder composition for nonaqueous secondary batteries) | Glass transition point (actual measurement value) | 30 | | 30 | | 34 | | 30 | | 30 | | 30 | |
| | | Nonvolatile content concentration (mass%) | 40 | | 40 | | 40 | | 40 | | 40 | | 40 | |
| | | Number of linear functions determined through least-squares method | 2 | | 2 | | 2 | | 2 | | 2 | | 2 | |
| | | a1 | 0.0715 | | 0.0639 | | 0.0659 | | 0.0715 | | 0.0736 | | 0.0787 | |
| | | a2 | 0.2240 | | 0.1899 | | 0.2245 | | 0.2201 | | 0.2205 | | 0.2252 | |
| | | b1 | 0.1188 | | 0.1080 | | 0.1175 | | 0.1188 | | 0.1170 | | 0.1423 | |
| | Battery | Internal resistance (DCR) (Ω) | 15 | | 13 | | 15 | | 15 | | 13 | | 13 | |
| | | Discharge capacity retention rate after 100 cycles (%) | 90 | | 90 | | 90 | | 90 | | 91 | | 91 | |
| | | Li precipitation (visual observation) | ◎ | | ◎ | | ◎ | | ○ | | ◎ | | ◎ | |

The numerical values in the right columns of the monomer (a) indicate parts by mass of each monomer when the total amount of monomer (a1) is regarded as 100 parts by mass.

[Table 2]

| | Component | | Compound name | Comparative Example 1 | | Comparative Example 2 | | Comparative Example 3 | |
|---|---|---|---|---|---|---|---|---|---|
| | | | | | ※1 | | ※1 | | ※1 |
| Amount of components used in producing binder polymer (parts by mass) | Monomer (a) | Monomer (a1) | Styrene | 220 | 100 | 220 | 100 | 220 | 100 |
| | | | Methyl methacrylate | 0 | | 0 | | 0 | |
| | | | n-Buthyl acrylate | 0 | | 0 | | 0 | |
| | | | 2-Ethylhexyl acrylate | 140 | | 140 | | 140 | |
| | | Monomer (a2) | Methacrylic acid | 0 | 0.00 | 0 | 0.00 | 0 | 0.00 |
| | | | Crotonic acid | 0 | 0.00 | 0 | 0.00 | 0 | 0.00 |
| | | | Acrylic acid | 10 | 2.78 | 20 | 5.56 | 0 | 0.00 |
| | | | Itaconic acid | 10 | 2.78 | 0 | 0.00 | 20 | 5.56 |
| | | | Sodium p-styrene sulfonate | 3.5 | 0.97 | 3.5 | 0.97 | 3.5 | 0.97 |
| | | Internal cross-linking agent (a3) | Divinylbenzene | 5.0 | 1.39 | 5.0 | 1.39 | 5.0 | 1.39 |
| | | | Trimethylolpropane triacrylate | 0.0 | 0.00 | 0.0 | 0.00 | 0.0 | 0.00 |
| | | Polymerizable surfactant (a4) | Polyoxyethylene alkyl ether sulfate ester salt | 2.5 | 0.69 | 2.5 | 0.69 | 2.5 | 0.69 |
| | Radical polymerization initiator (e) | Polymerization initiator (e-1) | Potassium persulfate | 2 | | 2 | | 2 | |
| | | Polymerization initiator (e-2) | tert-Butyl peroxybenzoate | 1 | | 1 | | 1 | |
| | | | Ascorbic acid | 0.5 | | 0.5 | | 0.5 | |
| | | Polymerization initiator (e-3) | tert-Butyl hydroperoxide | 1 | | 1 | | 1 | |
| | | | Ascorbic acid | 0.5 | | 0.5 | | 0.5 | |
| | Basic substance (d) | | Ammonia | 4 | | 4 | | 4 | |
| | Aqueous medium (b) | | Water | 600 | | 600 | | 600 | |

(continued)

| | Component | Compound name | Comparative Example 1 | | Comparative Example 2 | | Comparative Example 3 | |
|---|---|---|---|---|---|---|---|---|
| | | | | ※ 1 | | ※ 1 | | ※ 1 |
| Evaluation | Binder polymer (binder composition for nonaqueous secondary batteries) | Glass transition point (actual measurement value) | 30 | | 30 | | 30 | |
| | | Nonvolatile content concentration (mass%) | 40 | | 40 | | 40 | |
| | | Number of linear functions determined through least-squares method | 3 | | 3 | | 3 | |
| | | a1 | | | | | | |
| | | a2 | | | | | | |
| | | b1 | | | | | | |
| | Battery | Internal resistance (DCR) (Ω) | 25 | | 23 | | 26 | |
| | | Discharge capacity retention rate after 100 cycles (%) | 87 | | 87 | | 89 | |
| | | Li precipitation (visual observation) | Δ | | Δ | | Δ | |

※ The numerical values in the right columns of the monomer (a) indicate parts by mass of each monomer when the total amount of monomer (a1) is regarded as 100 parts by mass.

The amount of ammonia as the basic substance (d) shown in Tables 1 and 2 is the amount (parts by mass) of ammonia contained in the ammonia water.

The amount of water as the aqueous medium (b) shown in Tables 1 and 2 is the total amount (parts by mass) of water contained in the binder composition for nonaqueous secondary batteries.

The polymerizable surfactant (a4) shown in Tables 1 and 2 is a polyoxyethylene alkyl ether sulfate ester salt (the compound shown in Chemical Formula (2), manufactured by Dai-Ichi Kogyo Seiyaku Co., Ltd., Aquaron KH-10).

The polymerization initiator (e-2) is tert-butyl peroxybenzoate (manufactured by Kayaku Akzo Corporation, Kayabutyl B).

The polymerization initiator (e-3) is tert-butyl hydroperoxide (manufactured by Kayaku Akzo Corporation, Kayabutyl H-70).

<2. Evaluation of binder polymer and binder composition for nonaqueous secondary batteries>

The glass transition point Tg was measured for each of the binder polymers of Examples 1 to 6 and Comparative Examples 1 to 3 through the method shown below. The results are shown in Tables 1 and 2. The nonvolatile content concentration was measured for each of the binder compositions for nonaqueous secondary batteries of Examples 1 to 6 and Comparative Examples 1 to 3 through the following method. The results are shown in Tables 1 and 2.

[Glass transition point Tg]

A 2 mm thick film made of a binder polymer was obtained through a method of applying a binder composition for nonaqueous secondary batteries onto a release polyethylene terephthalate (PET) film and drying it at 50°C for 5 hours.

A square test piece of 2 mm in length and 2 mm in width was cut out from the obtained film. The test piece was

sealed in an aluminum pan, and differential scanning calorimetry (DSC) measurement was performed on the above-described test piece using a differential scanning calorimeter (manufactured by Hitachi High-Tech Corporation, EXSTAR DSC/SS7020) at a temperature increase rate of 10°C/min in a nitrogen gas atmosphere. The temperature range for the DSC measurement was set to -40°C to 200°C. The peak top temperature of a DDSC chart obtained as the temperature derivative of DSC was measured and used as the glass transition point Tg (°C) of the binder polymer.

[Nonvolatile content concentration]

1 g of the binder composition for nonaqueous secondary batteries was weighed, placed on a 5 cm diameter aluminum plate, and placed in a dryer. The binder composition in the dryer was dried at 1 atm (1013 hPa) and at a temperature of 105°C for 1 hour while the air inside the dryer was circulated, and the mass of remaining components was measured. The ratio (mass %) of the mass of the above-described components remaining after drying to the mass (1 g) of the binder composition for nonaqueous secondary batteries before drying was calculated and used as the nonvolatile content concentration.

In addition, electrical conductivity titration of the binder polymers of Examples 1 to 6 and Comparative Examples 1 to 3 was performed through the method shown below, using the binder compositions for nonaqueous secondary batteries of Examples 1 to 6 and Comparative Examples 1 to 3.

[Electrical conductivity titration]

(Adjustment of sample for titration)

Each binder composition for nonaqueous secondary batteries was diluted with a 0.3% dodecylbenzenesulfonic acid aqueous solution and adjusted to a solid content concentration of 8%, and 200 g of a water dispersion was obtained. The obtained water dispersion was centrifuged at 7,000 G for 30 minutes, and a light liquid (1) was isolated. The obtained light liquid (1) was diluted with a 0.3% dodecylbenzenesulfonic acid aqueous solution and adjusted to a solid content concentration of 8% to obtain an adjusted light liquid (1). The adjusted light liquid (1) was centrifuged at 7,000 G for 30 minutes, and a light liquid (2) was isolated. The obtained light liquid (2) was diluted with a 0.3% dodecylbenzenesulfonic acid aqueous solution and adjusted to a solid content concentration of 8% to obtain an adjusted light liquid (2). The adjusted light liquid (2) was centrifuged at 7,000 G for 30 minutes, and a light liquid (3) was isolated. The obtained light liquid (3) was diluted with a 0.3% dodecylbenzenesulfonic acid aqueous solution and adjusted to a solid content concentration of 8% to obtain an adjusted light liquid (3).

The pH of the adjusted light liquid (3) at 23°C was adjusted using a 1 % sodium hydroxide solution to obtain a sample for electrical conductivity titration (sample for titration) consisting of a water dispersion with a pH of 12.0 at 23°C containing the binder polymer at a solid content concentration of 8.0 mass%.

(Measurement of electrical conductivity)

125 g (10.0 g in terms of solid content) of the sample for titration was isolated into a 100-mL beaker, and the electrical conductivity (unit: S/m) of the sample for titration before adding a hydrochloric acid aqueous solution was measured while stirring under the condition of 150 rpm using a stirrer. Thereafter, a 1 mol/L hydrochloric acid aqueous solution was added to the sample for titration at a rate of 0.5 mL/30 seconds (0.5 mL every 30 seconds) while stirring the sample for titration in a beaker with a stirrer at 150 rpm, and the electrical conductivity (unit: S/m) of the sample for titration was measured every 30 seconds. The electrical conductivity was measured using a portable electrical conductivity and pH meter (WM-32EP) (manufactured by DKK-TOA Corporation) under the condition of a temperature of 23°C.

The addition of the hydrochloric acid aqueous solution to the sample for titration and the measurement of the electrical conductivity of the sample for titration were repeated until the electrical conductivity of the sample for titration reaches 2.0 S/m.

(Data processing)

The measured electrical conductivity of the sample for titration with respect to the cumulative addition amount of the hydrochloric acid aqueous solution obtained in this manner was plotted on the XY coordinates (orthogonal coordinate system) with the cumulative addition amount (mL) of the hydrochloric acid aqueous solution on the lateral axis (X-coordinate axis) and the electrical conductivity (S/m) of the sample for titration on the vertical axis (Y-coordinate axis).

The first straight line L1 and the second straight line L2 were then obtained through the above-described method for obtaining the first straight line L1 and the second straight line L2. If the linear functions obtained through the least-squares method using the method described above are only the first straight line L1 and the second straight line L2, a

slope ($a_1$) and an intercept (bi) of the first straight line L1 and a slope (a2) of the second straight line L2 were obtained. The number of linear functions obtained through the least-squares method was obtained using the above-described method for obtaining the first straight line L1 and the second straight line L2 if there are one or more linear functions in addition to the first straight line L1 and the second straight line L2. The results are shown in Tables 1 and 2.

<3. Manufacture of nonaqueous secondary battery>

Using the binder compositions for nonaqueous secondary batteries of Examples 1 to 6 and Comparative Examples 1 to 3, negative electrodes were prepared through the method shown below, and lithium-ion secondary batteries, which are nonaqueous secondary batteries of Examples 1 to 6 and Comparative Examples 1 to 3, were manufactured using the prepared negative electrodes.

[Preparation of Positive electrode]

A mixture was obtained by mixing 94 parts by mass of $LiNi_{0.6}Mn_{0.2}Co_{0.2}O_2$ as a positive electrode active material, 3 parts by mass of acetylene black as a conductive assistant, and 3 parts by mass of polyvinylidene fluoride as a binder. 50 parts by mass of N-methylpyrrolidone was added to the obtained mixture and further mixed together to obtain a positive electrode slurry.

15 μm thick aluminum foil was prepared as a positive electrode current collector. A positive electrode slurry was applied onto both surfaces of the positive electrode current collector through a direct roll method. The amount of positive electrode slurry applied to the positive electrode current collector was adjusted so that the thickness after a roll press processing to be described below was 125 μm per surface.

The positive electrode slurry applied onto the positive electrode current collector was dried at 120°C for 5 minutes and pressed through a roll press method using a roll press (manufactured by Thank Metal Co., Ltd., press load 5 t/cm, roll width 7 cm) to obtain a positive electrode sheet with positive electrode active material layers on both surfaces of the positive electrode current collector. The obtained positive electrode sheet was cut into a rectangle of 50 mm in length and 40 mm in width, and a conductive tab was attached to the thereto to obtain a positive electrode.

[Preparation of negative electrode (nonaqueous secondary battery electrode)]

100 parts by mass of artificial graphite (G49, manufactured by Jiangxi Zichen Technology Co., Ltd.) as a negative electrode active material, 3.9 parts by mass (1.5 parts by mass of a nonvolatile content (binder polymer)) of any of the binder compositions for nonaqueous secondary batteries manufactured in Examples 1 to 6 and Comparative Examples 1 to 3, and 62 parts by mass of a 2 mass% aqueous solution of carboxymethyl cellulose sodium salt (CMC, manufactured by Nippon Paper Chemicals Co., Ltd., Sunrose (registered trademark) MAC500LC) were mixed together, and 28 parts by mass of water was further added thereto and mixed together using a rotation-revolution mixer (ARE-310, manufactured by Thinky Corporation) to obtain a negative electrode slurry (slurry for nonaqueous secondary battery electrodes).

10 μm thick copper foil was used as a negative electrode current collector. A negative electrode slurry was applied onto both surfaces of the negative electrode current collector through a direct roll method. The amount of negative electrode slurry applied to the negative electrode current collector was adjusted so that the thickness after a roll press processing to be described below was 170 μm per surface.

The negative electrode slurry applied onto the negative electrode current collector was dried at 90°C for 10 minutes and pressed through a roll press method using a roll press (manufactured by Thank Metal Co., Ltd., press load 8 t/cm, roll width 7 cm) to obtain a negative electrode sheet with negative electrode active material layers on both surfaces of the negative electrode current collector. The obtained negative electrode sheet was cut into a rectangle of 52 mm in length and 42 mm in width, and a conductive tab was attached to the thereto to obtain a negative electrode.

[Preparation of nonaqueous secondary battery]

A separator consisting of a polyolefin porous film (made of polyethylene, 25 μm thick) was interposed between positive and negative electrodes, and a positive electrode active material layer and a negative electrode active material layer were stacked so that they faced each other, and stored inside an exterior body (battery pack) made of an aluminum laminate material. Thereafter, a lithium-ion secondary battery was obtained by pouring an electrolyte into the exterior body, performing vacuum impregnation, and packing with a vacuum heat sealer.

As the electrolyte, one obtained by mixing 1 parts by mass of vinylene carbonate with 99 parts by mass of a solution of $LiPF_6$ at a concentration of 1.0 mol/L, wherein $LiPF_6$ has been dissolved in a mixed solvent containing ethylene carbonate (EC), ethyl methyl carbonate (EMC), and diethyl carbonate (DEC) in a volume ratio of EC:EMC:DEC =

30:50:20, was used.

<4. Evaluation of nonaqueous secondary battery>

The internal resistance, discharge capacity retention rate after 100 cycles, and Li precipitation were evaluated for the lithium-ion secondary batteries of Examples 1 to 6 and Comparative Examples 1 to 3 through the methods shown below. The results are shown in Tables 1 and 2.

[Internal resistance (DCR)]

The internal resistance (DCR (Ω)) of each lithium-ion secondary battery was measured under the condition of a temperature of 25°C according to the following procedure. That is, constant current charging was performed at 0.2 C from a rest potential until the voltage reached 3.6 V and the charge state was 50% of the initial capacity (50% SOC). Thereafter, the discharge was performed at each current value of 0.2 C, 0.5 C, 1 C, and 2 C for 60 seconds. The internal resistance DCR (Ω) at 50% SOC was determined from the relationship between the voltage and these four types of current values (in 1 second).

[Discharge capacity retention rate after 100 cycles]

Charging and discharging were performed under the condition of 45°C, wherein a series of operations performed in the steps (i) to (iv) shown below is counted as one cycle. Time-integrated values of currents in steps (i) and (ii) were regarded as charge capacity, and a time-integrated value of a current in the step (iv) was regarded as discharge capacity. Discharge capacity at the first cycle and discharge capacity at the 100th cycle were then measured, and the discharge capacity retention rate after 100 cycles was calculated according to the following equation. Discharge capacity retention rate (%) = 100 × (discharge capacity at 100th cycle/ discharge capacity at first cycle)
(i) Charge at a current of 1 C until the voltage reaches 4.2 V (constant-current (CC) charging).
(ii) Charge at a voltage of 4.2 V until the current reaches 0.05 C (constant-voltage (CV) charging).
(iii) Allow to stand for 30 minutes.
(iv) Charge at a current of 1 C until the voltage reaches 2.75 V (constant-current (CC) discharging).

[Evaluation of Li precipitation]

Each lithium-ion secondary battery was adjusted to a fully charged state (100% SOC) by performing only one cycle of the series of the above-described steps (i) to (iii), in the same manner as in the above-described steps (i) to (iii), except that the current was set to 1.5 C under the condition of 10°C. The fully charged lithium-ion secondary battery was disassembled in a glove box in an argon atmosphere, and the surface on the electrode active material layer side of the negative electrode was visually observed.
On the surface of the electrode active material layer side of the negative electrode, the normally charged area has a gold color. However, when Li precipitates in the electrode active material layer, the electrode active material layer turns gray. Therefore, those with a high ratio of the area of the gray portion to the total area of the electrode active material layer have a high degree of Li precipitation. In the present embodiment, the degree of Li precipitation in the negative electrode was evaluated based on the following criteria using the ratio of the area of the gray portion to the total area of the electrode active material layer of the negative electrode.

[Criteria]

◎ (Superior); the degree of Li precipitation (area of the gray portion) is less than 30% of the entire electrode active material layer.
O (Favorable); the degree of Li precipitation (area of the gray portion) is greater than or equal to 30% and less than 50% of the entire electrode active material layer.
Δ (acceptable); the degree of Li precipitation (area of the gray portion) is greater than or equal to 50% of the entire electrode active material layer.

<5. Evaluation results>

As shown in Tables 1 and 2, it was possible to confirm that the lithium-ion secondary batteries of Examples 1 to 6 all showed lower internal resistance and higher capacity retention, which were effects, compared to the lithium-ion secondary batteries of Comparative Examples 1 to 3.

In addition, it was possible to confirm that the lithium-ion secondary batteries of Examples 1 to 6 all suppressed Li precipitation, which was a secondary effect other than the main effect of the present invention, compared to the lithium-ion secondary batteries of Comparative Examples 1 to 3.

This is presumably due to the fact that there are only two linear functions, the first straight line L1 and the second straight line L2, obtained through the least-squares method from the binder polymers contained in the negative electrodes of the lithium-ion secondary batteries of Examples 1 to 6, and that there are three linear functions obtained through the least-squares method from the binder polymers contained in the negative electrodes of the lithium-ion secondary batteries of Comparative Examples 1 to 3.

[Industrial Applicability]

According to the present invention, it is possible to provide a binder polymer for nonaqueous secondary batteries that can be used as a material for a binder from which nonaqueous secondary batteries with a low internal resistance and excellent cycle characteristics can be obtained.

## Claims

**1.** A binder polymer for nonaqueous secondary batteries,

wherein, when a water dispersion having a pH of 12.0 at 23°C, which contains the binder polymer for nonaqueous secondary batteries at a solid content concentration of 8.0 mass%, is prepared and a 1.0 mol/L hydrochloric acid aqueous solution is added to 125 g of the water dispersion at a rate of 0.5 mL/30 seconds, there are only two linear functions, a first straight line L1 and a second straight line L2, which are determined through a least-squares method from a relationship between an electrical conductivity of y S/m of the water dispersion and a cumulative addition amount of x mL of the hydrochloric acid aqueous solution from the start of addition of the hydrochloric acid aqueous solution and until the electrical conductivity of the water dispersion reaches 2.0 S/m,
the first straight line L1 is represented by Formula (1) below, and
the second straight line L2 is represented by Formula (2) below,

$$y = a_1x + b_1 \ ... \ (1)$$

(in Equation (1), $a_1$ and $b_1$ are greater than 0), and

$$y = a_2x + b_2 \ ... \ (2)$$

(in Equation (2), $a_2$ is greater than $a_1$).

**2.** The binder polymer for nonaqueous secondary batteries according to claim 1, wherein $a_1$ in Equation (1) above is 0.05 to 0.1.

**3.** The binder polymer for nonaqueous secondary batteries according to claim 1 or 2,
wherein $a_2$ in Equation (2) above is 0.15 to 0.3.

**4.** The binder polymer for nonaqueous secondary batteries according to any one of claims 1 to 3,
wherein $b_1$ in Equation (1) above is 0.05 to 0.3.

**5.** The binder polymer for nonaqueous secondary batteries according to any one of claims 1 to 4,

wherein the binder polymer for nonaqueous secondary batteries includes
a first structural unit derived from a monomer (a1),

a second structural unit derived from a monomer (a2), and
a third structural unit derived from an internal cross-linking agent (a3),
wherein the monomer (a1) is a nonionic compound having only one ethylenically unsaturated bond,
wherein the monomer (a2) is a compound having only one ethylenically unsaturated bond and an anionic functional group, and
wherein the internal cross-linking agent (a3) is a compound having a plurality of independent ethylenically unsaturated bonds.

**6.** The binder polymer for nonaqueous secondary batteries according to claim 5,
wherein the anionic functional group is at least any of a carboxy group and a sulfo group.

**7.** The binder polymer for nonaqueous secondary batteries according to claim 5 of 6,
wherein the monomer (a2) contains at least one of methacrylic acid, fumaric acid, and crotonic acid.

**8.** The binder polymer for nonaqueous secondary batteries according to any one of claims 5 to 7,
wherein the binder polymer contains a total content of 80 mass% or more of the first structural unit and the second structural unit.

**9.** The binder polymer for nonaqueous secondary batteries according to any one of claims 5 to 8,
wherein the content of the second structural unit based on 100 parts by mass of the first structural unit is 1.0 parts by mass to 30 parts by mass.

**10.** A binder composition for nonaqueous secondary batteries, comprising:

the binder polymer for nonaqueous secondary batteries according to any one of claims 1 to 9; and
an aqueous medium.

**11.** A binder for nonaqueous secondary batteries, comprising:
the binder polymer for nonaqueous secondary batteries according to any one of claims 1 to 9.

**12.** A slurry for nonaqueous secondary battery electrodes, comprising:

the binder polymer for nonaqueous secondary batteries according to any one of claims 1 to 9;
an electrode active material; and
an aqueous medium,
wherein the aqueous medium is one selected from the group consisting of water, a hydrophilic solvent, and a mixture containing water and a hydrophilic solvent.

**13.** A nonaqueous secondary battery electrode comprising:
the binder polymer for nonaqueous secondary batteries according to any one of claims 1 to 9.

**14.** A nonaqueous secondary battery comprising:
the nonaqueous secondary battery electrode according to claim 13.

FIG. 1

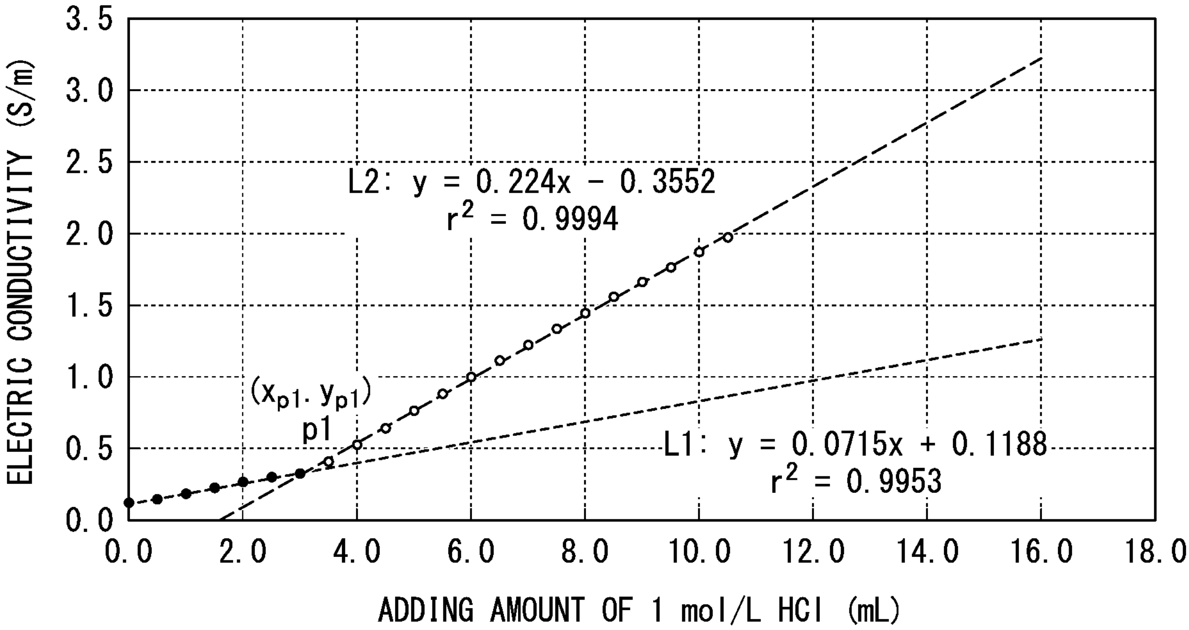
3.5
3.0
2.5
2.0
1.5
1.0
0.5
0.0
ELECTRIC CONDUCTIVITY (S/m)
L2: y = 0.224x - 0.3552
r2 = 0.9994
(xp1, yp1)
p1
L1: y = 0.0715x + 0.1188
r2 = 0.9953
0.0
2.0
4.0
6.0
8.0
10.0
12.0
14.0
16.0
18.0
ADDING AMOUNT OF 1 mol/L HCl (mL)

FIG. 2

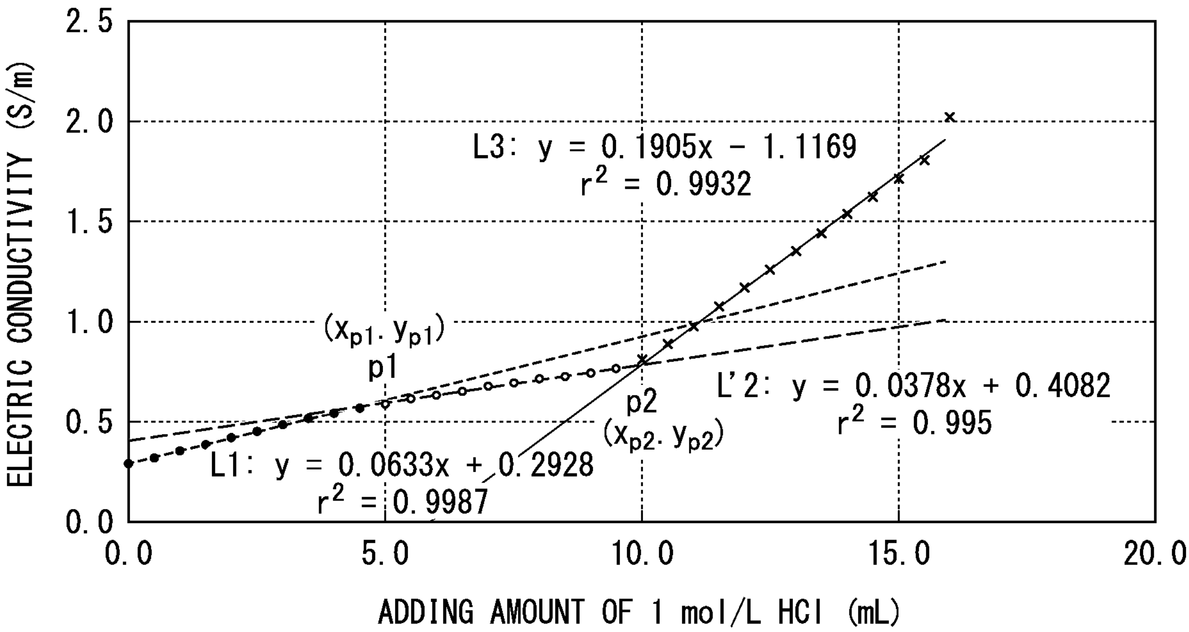
2.5
2.0
1.5
1.0
0.5
0.0
ELECTRIC CONDUCTIVITY (S/m)
L3: y = 0.1905x - 1.1169
r2 = 0.9932
(xp1, yp1)
p1
L'2: y = 0.0378x + 0.4082
r2 = 0.995
p2
(xp2, yp2)
L1: y = 0.0633x + 0.2928
r2 = 0.9987
0.0
5.0
10.0
15.0
20.0
ADDING AMOUNT OF 1 mol/L HCl (mL)

## INTERNATIONAL SEARCH REPORT

International application No.
**PCT/JP2022/041350**

**A. CLASSIFICATION OF SUBJECT MATTER**

***H01M 4/62***(2006.01)i; ***H01M 4/139***(2010.01)i
FI: H01M4/62 Z; H01M4/139

According to International Patent Classification (IPC) or to both national classification and IPC

**B. FIELDS SEARCHED**

Minimum documentation searched (classification system followed by classification symbols)

H01M4/62; H01M4/139

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/246222 A1 (ZEON CORP) 10 December 2020 (2020-12-10) | 1-14 |
| A | WO 2015/045522 A1 (SHOWA DENKO KK) 02 April 2015 (2015-04-02) | 1-14 |
| A | WO 2019/107229 A1 (ZEON CORP) 06 June 2019 (2019-06-06) | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 January 2023** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/041350**

| Patent document cited in search report | Publication date (day/month/year) | Patent family member(s) | Publication date (day/month/year) |
|---|---|---|---|
| WO 2020/246222 A1 | 10 December 2020 | US 2022/0223875 A1 | |
| | | EP 3981812 A1 | |
| | | CN 113874412 A | |
| | | KR 10-2022-0016825 A | |
| WO 2015/045522 A1 | 02 April 2015 | US 2016/0248095 A1 | |
| | | CN 105580174 A | |
| | | KR 10-2016-0045142 A | |
| WO 2019/107229 A1 | 06 June 2019 | US 2021/0135225 A1 | |
| | | EP 3719893 A1 | |
| | | CN 111418098 A | |
| | | KR 10-2020-0093543 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021214258 A
- WO 2019107229 A
- JP 2014239070 A